# EUROPEAN PATENT APPLICATION

(11) **EP 4 478 768 A1**
(43) Date of publication of application: **18.12.2024**
(21) Application number: 22925813.2
(22) Date of filing: 08.02.2022
(51) Int. Cl.: H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); SHIBAIKE, Naoya, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/004872
(87) International publication number: WO 2023/152791

(57) **Abstract**

A terminal according to one aspect of the present disclosure includes a receiving section that receives a configuration of a plurality of sounding reference signal (SRS) resource sets including one or more types of SRS resource sets, and a control section that controls transmission of an SRS using an antenna port corresponding to an SRS resource in the plurality of SRS resource sets, based on the configuration corresponding to a resource set group including the plurality of SRS resource sets. According to one aspect of the present disclosure, SRS transmission can be appropriately controlled when antenna switching is configured as a usage of an SRS.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, there are various usages of a sounding reference signal (SRS) transmitted by a terminal (user terminal, User Equipment (UE)). For future radio communication systems (for example, Rel. 17), enhancement of the SRS has been under study.

In Rel-15 NR, antenna switching can be configured as a usage of the SRS. However, a configuration related to the SRS when antenna switching is configured as the usage of the SRS has not been fully studied. In this case, it is difficult for the UE to appropriately perform SRS transmission, and thus communication throughput may be deteriorated.

In view of this, the present disclosure has one object to provide a terminal, a radio communication method, and a base station that can appropriately control SRS transmission when antenna switching is configured as a usage of an SRS.

### Solution to Problem

A terminal according to one aspect of the present disclosure includes a receiving section that receives a configuration of a plurality of sounding reference signal (SRS) resource sets including one or more types of SRS resource sets, and a control section that controls transmission of an SRS using an antenna port corresponding to an SRS resource in the plurality of SRS resource sets, based on the configuration corresponding to a resource set group including the plurality of SRS resource sets.

### Advantageous Effects of Invention

According to one aspect of the present disclosure, SRS transmission can be appropriately controlled when antenna switching is configured as a usage of an SRS.

### Brief Description of Drawings

[FIG. 1] A diagram to show a correspondence example between SRS resources and antenna ports in a case of 1T2R in Rel. 16.
[FIG. 2] A diagram to show a correspondence example between SRS resources and antenna ports in a case of 2T4R in Rel. 16.
[FIG. 3] A diagram to show a first example of a correspondence between SRS resources and antenna ports in a case of 1T4R in Rel. 16.
[FIG. 4] A diagram to show a second example of a correspondence between SRS resources and antenna ports in the case of 1T4R in Rel. 16.
[FIG. 5] A diagram to show a third example of a correspondence between SRS resources and antenna ports in the case of 1T4R in Rel. 16.
[FIG. 6] A diagram to show a first example of a correspondence between SRS resources and antenna ports in a case of 1T6R in Rel. 16.
[FIG. 7] A diagram to show a second example of a correspondence between SRS resources and antenna ports in the case of 1T6R in Rel. 16.
[FIG. 8] A diagram to show a first example of a correspondence between SRS resources and antenna ports in a case of 1T8R in Rel. 16.
[FIG. 9] A diagram to show the first example of a correspondence between SRS resources and antenna ports in a case of 1T8R in Rel. 16.
[FIG. 10] A diagram to show a correspondence example between SRS resources and antenna ports in a case of 2T6R in Rel. 16.
[FIG. 11] A diagram to show a correspondence example between SRS resources and antenna ports in a case of 2T8R in Rel. 16.
[FIG. 12] A diagram to show a correspondence example between SRS resources and antenna ports in a case of 4T8R in Rel. 16.
[FIG. 13] A diagram to show a correspondence example between SRS resources and antenna ports in a case of 1T2R in a first embodiment.
[FIG. 14] A diagram to show a correspondence example between SRS resources and antenna ports in a case of 2T4R in the first embodiment.
[FIG. 15] A diagram to show a first example of a correspondence between SRS resources and antenna ports in a case of 1T4R in the first embodiment.
[FIG. 16] A diagram to show a second example of a correspondence between SRS resources and antenna ports in the case of 1T4R in the first embodiment.
[FIG. 17] A diagram to show a third example of a correspondence between SRS resources and antenna ports in the case of 1T4R in the first embodiment.
[FIG. 18] A diagram to show a correspondence example between SRS resources and antenna ports in a case of 1T6R in the first embodiment.
[FIG. 19] A diagram to show a correspondence example between SRS resources and antenna ports in a case of 1T8R in the first embodiment.
[FIG. 20] A diagram to show a correspondence example between SRS resources and antenna ports in a case of 2T6R in the first embodiment.
[FIG. 21] A diagram to show a correspondence example between SRS resources and antenna ports in a case of 2T8R in the first embodiment.
[FIG. 22] A diagram to show a correspondence example between SRS resources and antenna ports in a case of 4T8R in the first embodiment.
[FIG. 23] A diagram to show a correspondence example between SRS resources and antenna ports in a case of 1T2R in Rel. 16.
[FIG. 24] A diagram to show a correspondence example between an SRS resource and an antenna port in a case of 1T1R in Rel. 16.
[FIG. 25] A diagram to show a correspondence example between SRS resource sets and entries of a second modification.
[FIG. 26] FIG. 26A and FIG. 26B are diagrams to show first examples of a MAC CE of aspect 2-1.
[FIG. 27] FIG. 27A and FIG. 27B are diagrams to show the first examples of the MAC CE of aspect 2-1.
[FIG. 28] FIG. 28A and FIG. 28B are diagrams to show first examples of a MAC CE of aspect 2-2.
[FIG. 29] FIG. 29A and FIG. 29B are diagrams to show second examples of the MAC CE of aspect 2-2.
[FIG. 30] FIG. 30A and FIG. 30B are diagrams to show third examples of the MAC CE of aspect 2-2.
[FIG. 31] FIG. 31A and FIG. 31B are diagrams to show fourth examples of the MAC CE of aspect 2-2.
[FIG. 32] FIG. 32 is a diagram to show an example of a schematic structure of a radio communication system according to one embodiment.
[FIG. 33] FIG. 33 is a diagram to show an example of a structure of a base station according to one embodiment.
[FIG. 34] FIG. 34 is a diagram to show an example of a structure of a user terminal according to one embodiment.
[FIG. 35] FIG. 35 is a diagram to show an example of a hardware structure of the base station and the user terminal according to one embodiment.
[FIG. 36] FIG. 36 is a diagram to show an example of a vehicle according to one embodiment.

### Description of Embodiments

### (SRS)

In Rel-15 NR, there are various usages of a sounding reference signal (SRS). The SRS in NR is used not only for uplink (UL) CSI measurement that is used in existing LTE (LTE Rel. 8 to Rel. 14) as well, but is also used for downlink (DL) CSI measurement, beam management, and the like. The SRS may be used for positioning.

A terminal (user terminal, User Equipment (UE)) may be configured with one or a plurality of SRS resources. Each SRS resource may be identified with an SRS resource index (SRI).

Each SRS resource may include one or a plurality of SRS ports (may correspond to one or a plurality of SRS ports). For example, the number of ports for each SRS may be 1, 2, 4, or the like.

The UE may be configured with one or a plurality of SRS resource sets. One SRS resource set may be related to a certain number of SRS resources. The UE may use a common higher layer parameter for the SRS resources included in one SRS resource set. Note that the resource set in the present disclosure may be interpreted as a set, a resource group, a group, or the like.

Information related to the SRS resource or the resource set may be configured for the UE, using higher layer signaling, physical layer signaling (for example, downlink control information (DCI)), or a combination of these.

SRS configuration information (for example, an RRC information element "SRS-Config") may include SRS resource set configuration information, SRS resource configuration information, and the like.

The SRS resource set configuration information (for example, an RRC parameter "SRS-ResourceSet") may include pieces of information of an SRS resource set ID (Identifier) (SRS-ResourceSetId), a list of SRS resource IDs (SRS-ResourceId) used in the resource set, an SRS resource type, and a usage of the SRS, and the like. Note that the SRS resource ID may be referred to as an SRS Resource ID (SRI).

Here, the SRS resource type may indicate any one of a periodic SRS (P-SRS), a semi-persistent SRS (SP-SRS), and an aperiodic SRS (A-SRS). Note that the UE may transmit the P-SRS and the SP-SRS periodically (or periodically after activation). The UE may transmit the A-SRS, based on an SRS request on DCI.

The usage of the SRS (RRC parameter "usage") may be, for example, beam management (beamManagement), a codebook, a non-codebook (nonCodebook), antenna switching (antennaSwitching), or the like. For example, the SRS with the usage of the codebook or the non-codebook may be used for determination of a precoder for codebook based or non-codebook based uplink shared channel (Physical Uplink Shared Channel (PUSCH)) transmission based on the SRI.

For the SRS with the usage of beam management, it may be assumed that only one SRS resource in each SRS resource set can be transmitted in a certain time instant. Note that, when the plurality of SRS resources respectively belong to different SRS resource sets, these SRS resources may be simultaneously transmitted.

The SRS resource configuration information (for example, an RRC parameter "SRS-Resource") may include information related to an SRS resource ID (SRS-ResourceId), the number of SRS ports, an SRS port number, a transmission comb, SRS resource mapping (for example, a time and/or frequency resource position, a resource offset, periodicity of the resources, the number of repetitions, the number of SRS symbols, an SRS bandwidth, or the like), hopping, an SRS resource type, a sequence ID, spatial relation, and the like.

The UE may transmit the SRS in as many adjacent symbols as the number of SRS symbols within the last six symbols in one slot. Note that the number of SRS symbols may be 1, 2, 4, or the like. The UE may start SRS transmission from a symbol that is an offset before the last symbol in one slot. The offset may be 0 to 5 symbols given by an RRC parameter "startPosition".

Note that the number of repetitions (RRC parameter "repetitionFactor") may be a value equal to or less than the number of SRS symbols. When the number of repetitions is 2 or greater, the SRS of the number of SRS symbols may be repeatedly transmitted over a plurality of slots.

The UE may switch BWPs (Bandwidth Parts) for transmitting the SRS for each slot, or may switch antennas. The UE may apply at least one of intra-slot hopping and inter-slot hopping to SRS transmission.

### (SRS Antenna Switching)

In Rel-15 NR, as described above, antenna switching (which may be referred to as antenna port switching) can be configured as a usage of the SRS. SRS antenna switching may be used to perform downlink CSI acquisition (acquisition) in a time division duplex (TDD) band, using an uplink SRS, for example.

For example, for the UE having a capability that the number of antenna ports available for transmission is less than the number of antenna ports available for reception, UL SRS measurement may be used in order to determine a DL precoder.

Note that the UE may report, to a network, UE capability information (for example, an RRC parameter "supportedSRS-TxPortSwitch") indicating a transmission port switching pattern of the supported SRS. The pattern may be expressed in a format of "txry", such as "tlr2" and "t2r4", for example, and this may mean that SRS transmission can be performed using x antenna ports out of a total of y antennas (which may be expressed as xTyR). Here, y may correspond to all of or a subset of receive antennas of the UE.

For example, for DL CSI acquisition, the UE of 2T4R (2 transmission ports, 4 reception ports) may include two SRS resources each including two ports, and may be configured with the SRS resource set having the usage of antenna switching.

Note that, when x and y in "txty" have the same value, it may be expressed as xT = xR (for example, 4T = 4R).

The UE may assume that starting symbols of the SRS resources in the SRS resource set having the usage of antenna switching are different from each other. The UE may assume that there is a guard period between the SRS resources in the same SRS resource set.

The guard period may be referred to as a non-transmission period, an SRS switching period, a port switching period, or the like. The UE may assume no transmission of any signal (for example, any other signal) in the guard period in the slot in which the PUSCH is transmitted.

Using the guard period, the UE may turn on (which may be expressed as enable, start, or the like) the antenna port(s) to be used in the next SRS transmission.

The length of the guard period between the SRS resources may be a minimum guard period Y (Y = 1 or 2 symbols) or more between the SRS resources, which is described in Table 6.2.1.2-1 in 3GPP TS 38.214. For example, Y = 1 (when subcarrier spacing (SCS) = 15, 30, 60 kHz), Y = 2 (when SCS = 120 kHz), or the like may be employed.

The UE in Rel-15/16 NR expects that the same number of SRS ports is configured for all of the SRS resources in the SRS resource set having the usage of antenna switching.

The UE in Rel-15/16 NR that has reported a capability of 1T1R, 2T4R, and 1T4R does not expect that more than one SRS resource set is configured or triggered in the same slot.

The UE in Rel-15/16 NR that has reported a capability of 1T = 1R, 2T = 2R, and 4T = 4R does not expect that more than one SRS resource set is configured or triggered in the same symbol.

### <Specific Examples of Configurations to Apply Antenna Switching>

For example, for acquisition of DL CSI, the usage of the SRS is configured to "antenna switching". In Rel. 16, 1T1R, 2T2R, 4T4R, 1T2R, 2T4R, and 1T4R are supported. 1T2R, 2T4R, and 1T4R in Rel. 16 will be described below.

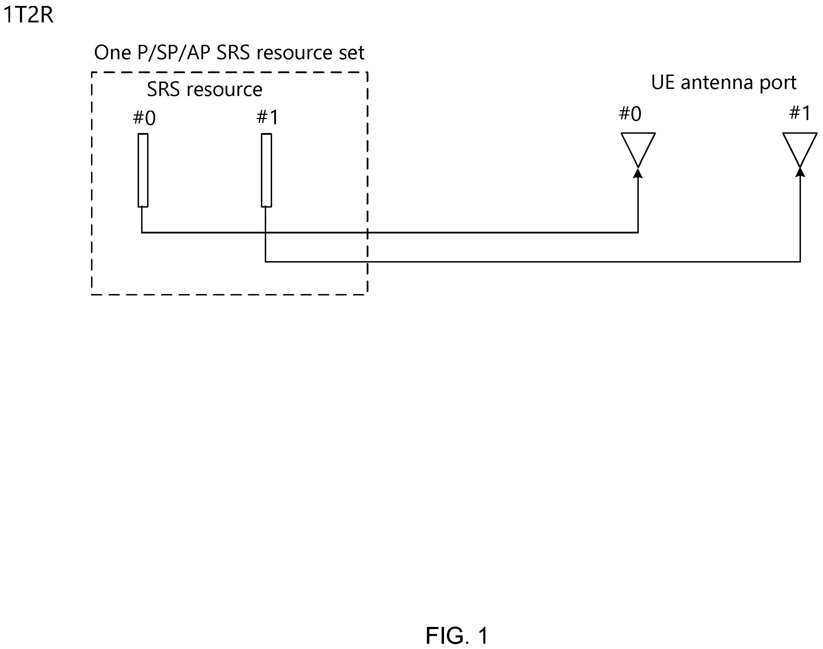

In a case of 1T2R, one SRS resource set may include two SRS resources, and each SRS resource may include a single SRS port (FIG. 1). The SRS port of a first resource in the SRS resource set is associated with a UE antenna port different from the SRS port of a second resource in the same set.

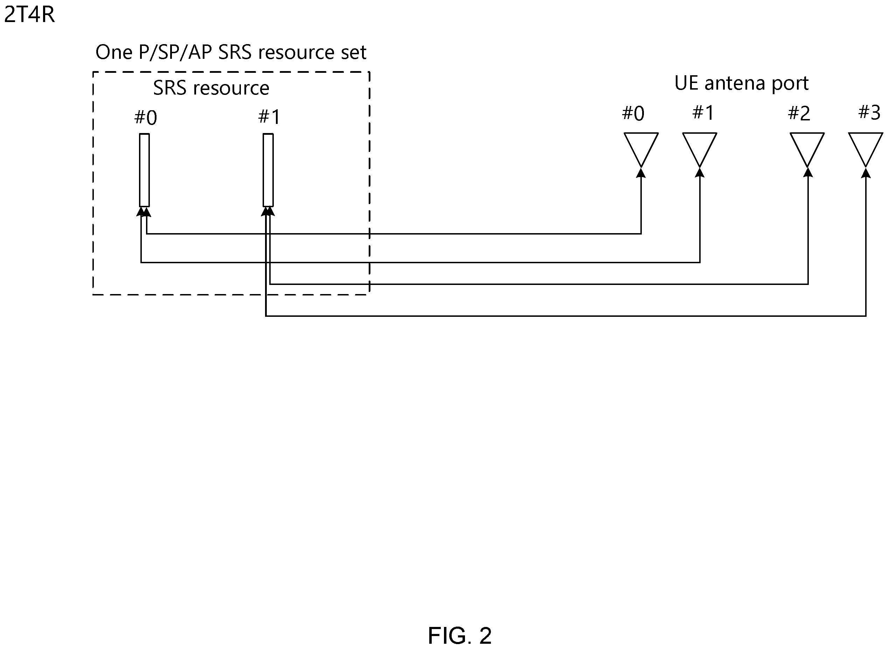

In a case of 2T4R, one SRS resource set may include two SRS resources, and each SRS resource may include two SRS ports (may be referred to as a port pair) (FIG. 2). The SRS port pair in a first SRS resource is associated with the UE antenna port pair different from the SRS port pair in a second SRS resource. In FIG. 2, UE antenna ports #0 and #1 are a pair, and UE antenna ports #2 and #3 are a pair.

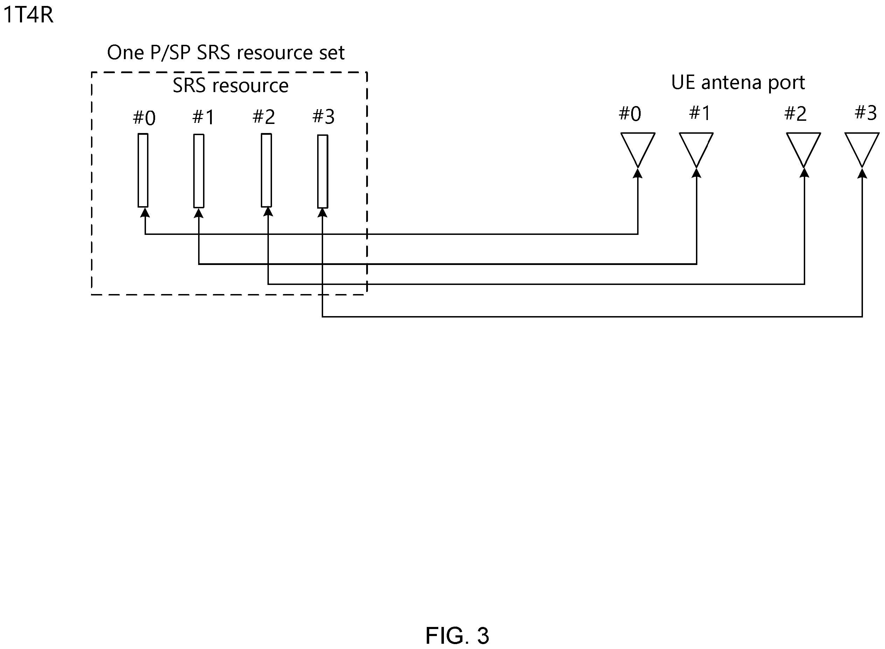

In a case of 1T4R, one P/SP SRS resource set may include four SRS resources, and each SRS resource may include a single SRS port (FIG. 3). The SRS ports of the SRS resources are associated with the UE antenna ports different from each other.

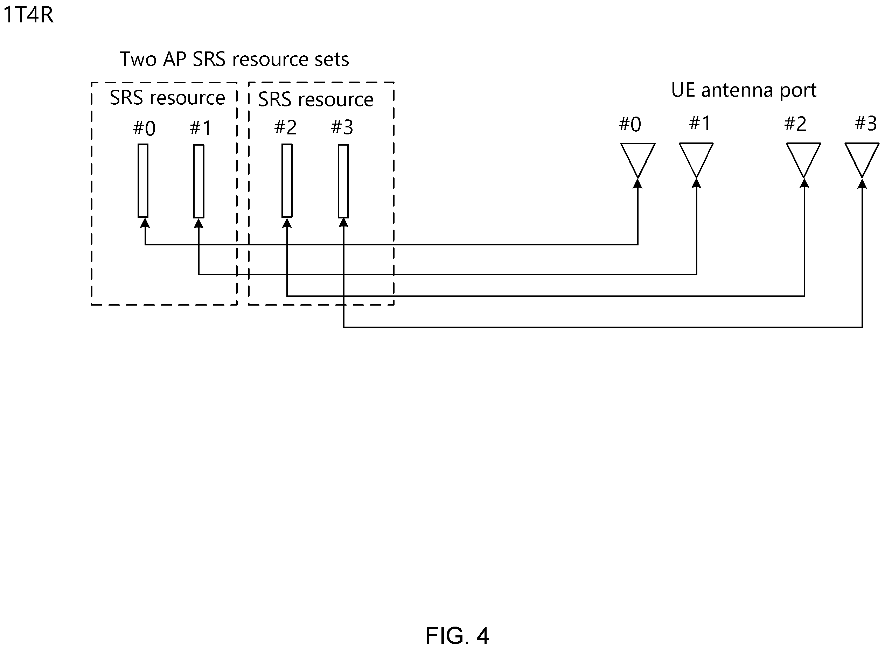

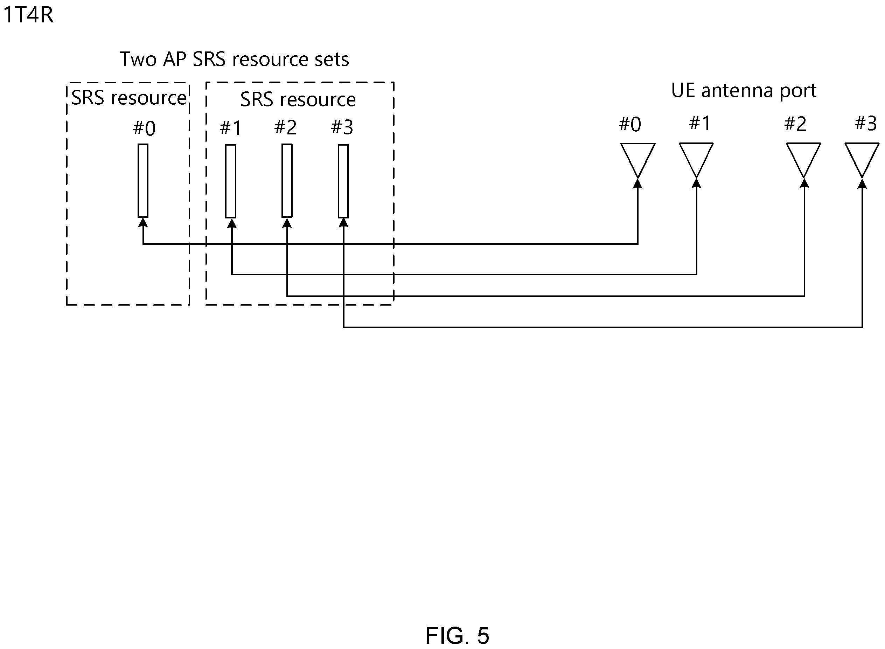

In a case of 1T4R, two AP SRS resource sets may include a total of four SRS resources, and the SRS ports of the SRS resources of the two resource sets may be associated with different UE antenna ports (FIG. 4 and FIG. 5). The two resource sets may each include two SRS resources (FIG. 4). Alternatively, one resource set in the two resource sets may include one SRS resource, and the other resource set may include three SRS resources (FIG. 5).

In Rel. 17, support of 1T6R, 1T8R, 2T6R, 2T8R, and 4T8R is further studied.

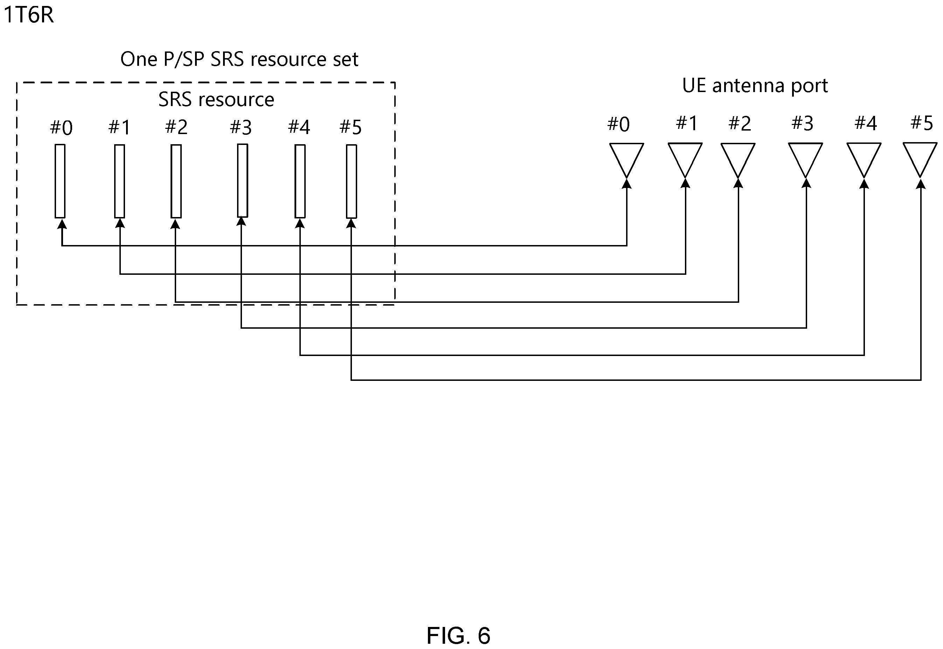

In a case of 1T6R, one P/SP SRS resource set may include six SRS resources, and each SRS resource may include a single SRS port (FIG. 6). The SRS ports of the SRS resources in the SRS resource set are associated with the UE antenna ports different from each other.

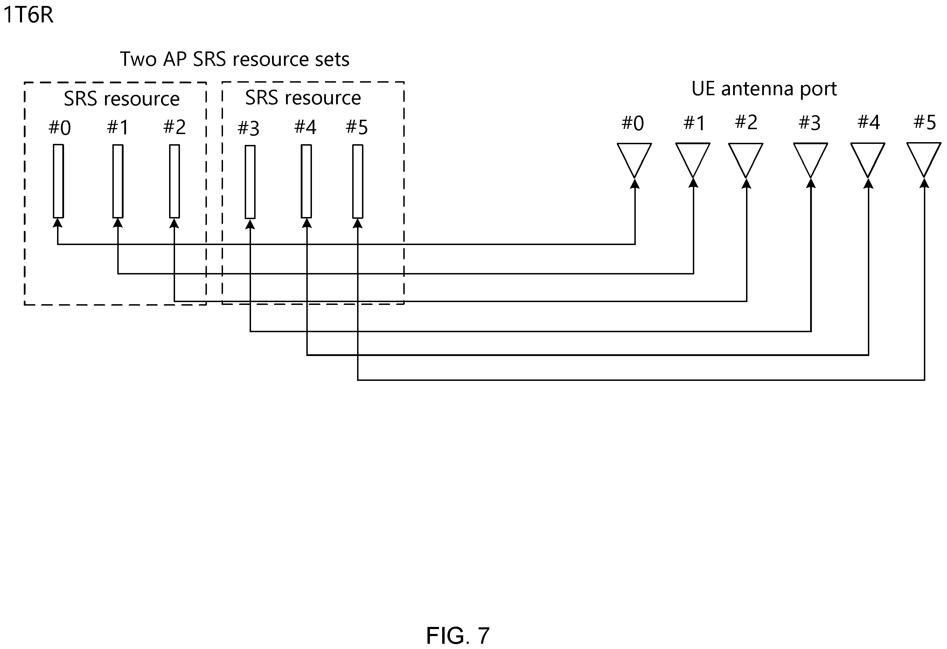

In a case of 1T6R, two AP SRS resource sets may include a total of six SRS resources and each SRS resource may include a single SRS port (FIG. 7), and the SRS ports of the SRS resources in the two resource sets are associated with the UE antenna ports different from each other. Note that the number of AP SRS resource sets may be three.

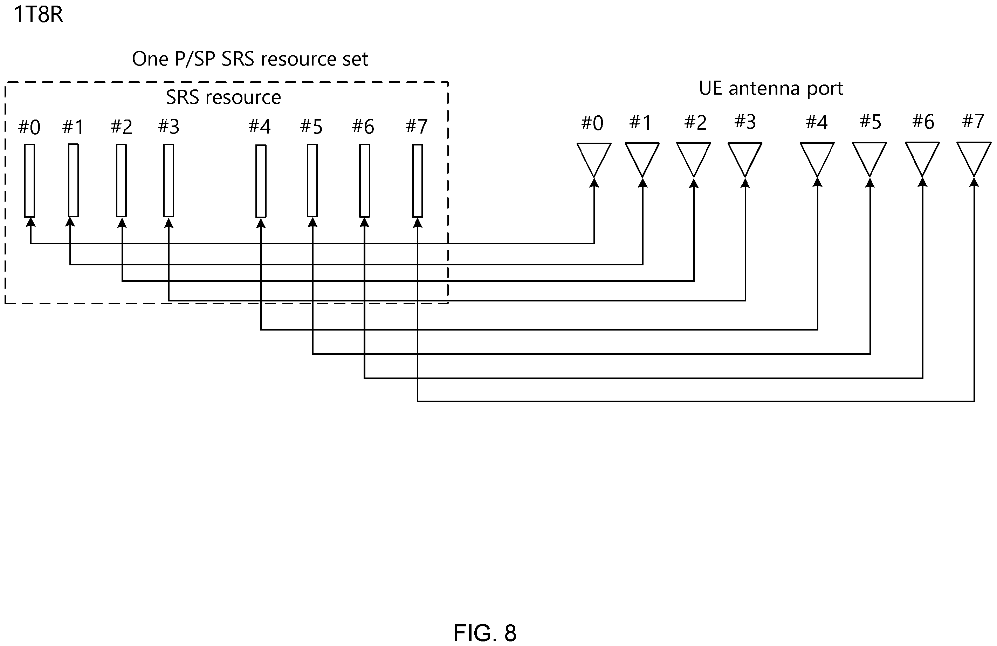

In a case of 1T8R, one P/SP SRS resource set may include eight SRS resources, and each SRS resource may include a single SRS port (FIG. 8). The SRS ports of different SRS resources in the SRS resource set are associated with different UE antenna ports.

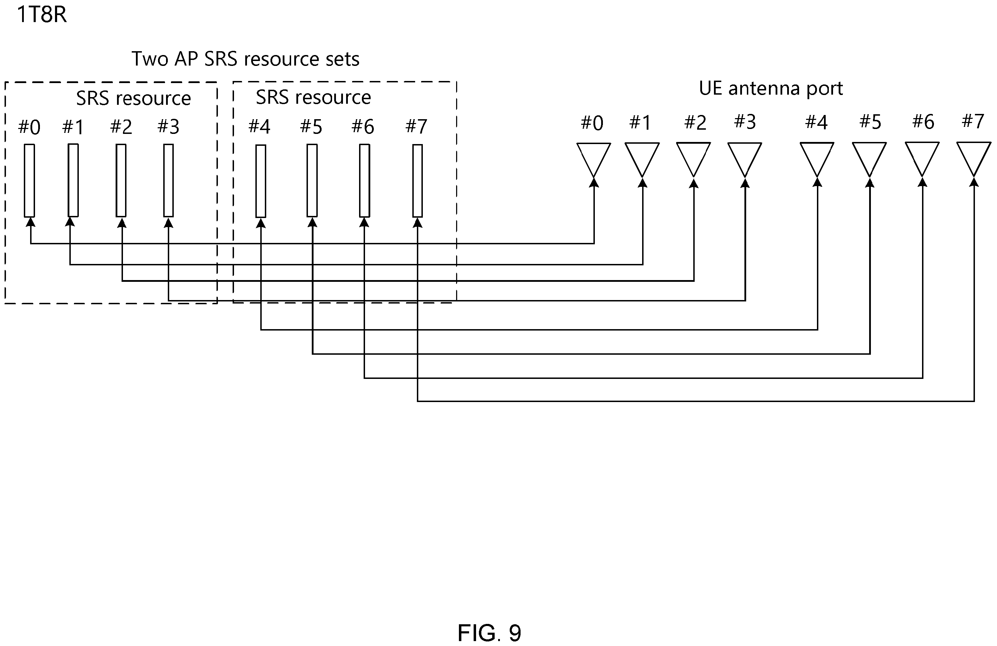

In a case of 1T8R, two AP SRS resource sets may include a total of eight SRS resources, and each SRS resource may include a single SRS port (FIG. 9). The SRS ports of the SRS resources in the two SRS resource sets are associated with the UE antenna ports different from each other. The number of AP SRS resource sets may be three or four.

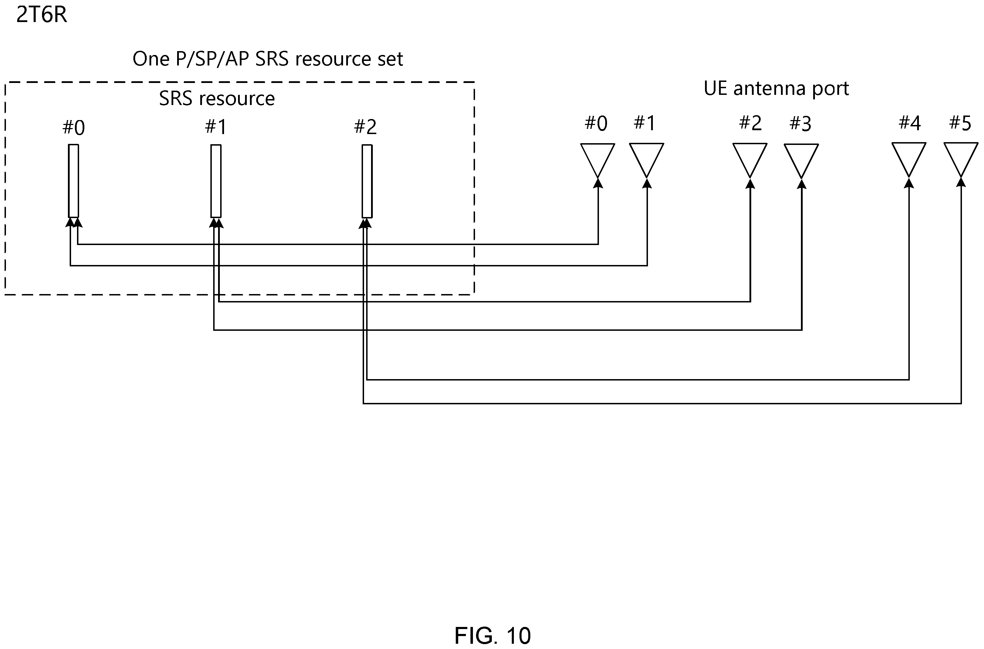

In a case of 2T6R, one P/SP/AP SRS resource set may include three SRS resources, and each SRS resource may include two SRS ports (FIG. 10). The SRS port pairs of the SRS resources in the SRS resource set are associated with the UE antenna port pairs different from each other. In FIG. 10, UE antenna ports #0 and #1 are a pair, UE antenna ports #2 and #3 are a pair, and UE antenna ports #4 and #5 are a pair. The number of AP SRS resource sets may be two or three, and each SRS resource set may include one or two SRS resources.

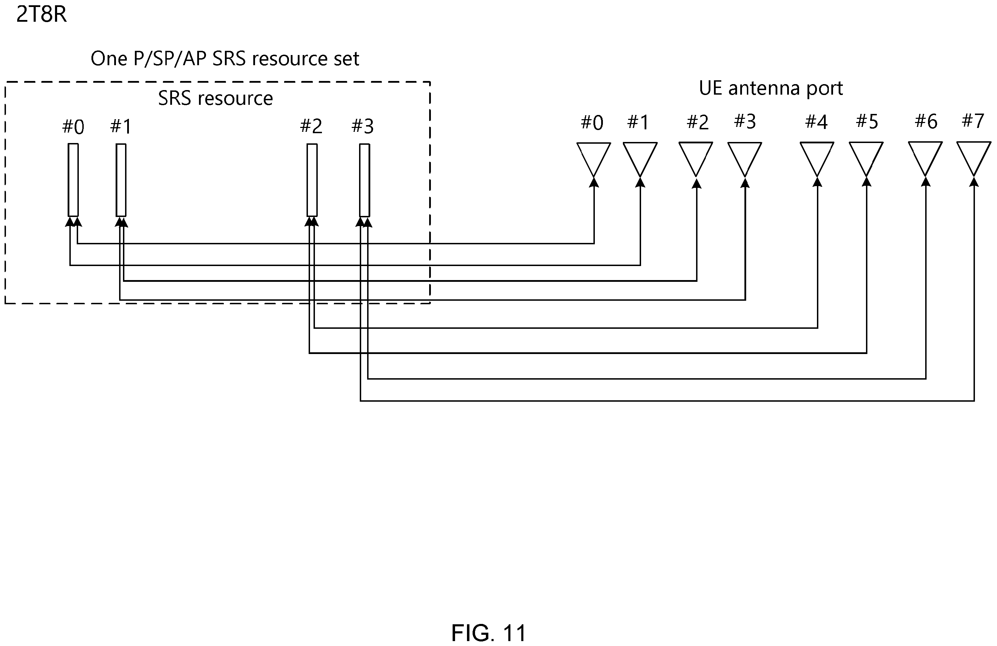

In a case of 2T8R, one P/SP/AP SRS resource set may include four SRS resources, and each SRS resource may include two SRS ports (FIG. 11). The SRS port pairs of the SRS resources in the SRS resource set are associated with the UE antenna port pairs different from each other. In FIG. 11, UE antenna ports #0 and #1 are a pair, UE antenna ports #2 and #3 are a pair, UE antenna ports #4 and #5 are a pair, and UE antenna ports #6 and #7 are a pair. The number of AP SRS resource sets may be two, three, or four, and each SRS resource set may include one, two, or three SRS resources.

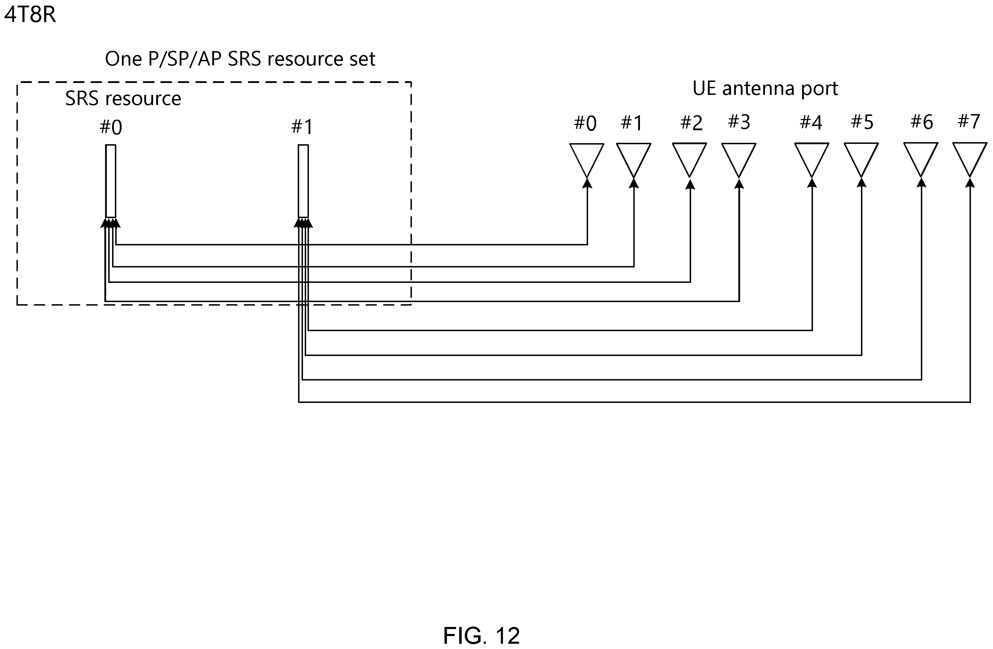

In a case of 4T8R, one P/SP/AP SRS resource set may include two SRS resources, and each SRS resource may include four SRS ports (FIG. 12). The SRS ports of the SRS resources in the SRS resource set are associated with the UE antenna ports different from each other. The number of AP SRS resource sets may be two, and each SRS resource set may include one SRS resource.

### (Analysis)

In Rel-15 NR, as described above, antenna switching can be configured as a usage of the SRS. However, a configuration related to the SRS when antenna switching is configured as the usage of the SRS has not been fully studied. In this case, it is difficult for the UE to appropriately control SRS transmission, and thus communication throughput may be deteriorated.

For example, in Rel. 16/17, P/SP/AP SRS resource transmission is configured/activated/triggered for each SRS resource set. However, a configuration when a plurality of SRS resource sets are applied has not been made clear.

When an SRS resource set is configured/activated/triggered, the UE transmits all of the SRS resources in the SRS resource set. Then, the SRS resources are associated with the UE antenna ports/pair (group) of UE antenna ports, and thus when a P/SP/AP SRS resource set is configured/started/triggered, the CSI of all of the UE antenna ports is acquired.

However, with the aid of artificial intelligence (AI), for example, it may not be necessary for a network to always acquire the CSI of all of the UE antenna ports. For example, the CSI of only a part of the UE antenna ports may be acquired. In such a case, unless the SRS resource set for antenna switching can be flexibly configured/started/triggered, overhead of the SRS may increase and communication throughput may be deteriorated.

In view of this, the inventors of the present invention came up with the idea of a terminal that can receive an appropriate configuration when antenna switching is configured as the usage of the SRS.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, description of "Rel. XX" indicates a release of 3GPP. Note that release number "XX" is an example, and may be replaced with another number.

In the present disclosure, a P SRS and a P-SRS may be interchangeably interpreted. In the present disclosure, an SP SRS and an SP-SRS may be interchangeably interpreted. In the present disclosure, an AP SRS and an AP-SRS may be interchangeably interpreted. A resource set group and an SRS resource set group may be interchangeably interpreted.

### (Radio Communication Method)

### <First Embodiment>

A new configuration method related to an SRS resource set having the usage of antenna switching with application of 1T2R, 1T4R, 2T4R, 1T6R, 1T8R, 2T6R, 2T8R, and 4T8R will be described. The UE may receive a configuration of a plurality of sounding reference signal (SRS) resource sets including one or more types (resource types) of SRS resource sets, and control transmission of an SRS using an antenna port corresponding to an SRS resource in the plurality of SRS resource sets, based on the configuration. The configuration may correspond to a resource set group including the plurality of SRS resource sets to be described later.

As described above, the UE may be configured with a plurality of (X) resource sets, and the plurality of resource sets include a total of two or more resources. For example, a total of two resources are provided in 1T2R/2T4R/4T8R, a total of four resources are provided in 1T4R/2T8R, a total of six resources are provided in 1T6R, a total of eight resources are provided in 1T8R, and a total of three resources are provided in 2T6R. Regarding each resource set, for example, any one of the following cases 1 to 7 may be applied.

[Case 1] All of X SRS resource sets are P SRS resource sets.
[Case 2] All of X SRS resource sets are SP SRS resource sets.
[Case 3] All of X SRS resource sets are AP SRS resource sets.
[Case 4] Of X resource sets, at least one may be a P SRS resource set, and the rest may be SP SRS resource sets.
[Case 5] Of X resource sets, at least one may be a P SRS resource set, and the rest may be AP SRS resource sets.
[Case 6] Of X resource sets, at least one may be an SP SRS resource set, and the rest may be AP SRS resource sets.
[Case 7] Of X (when X ≥ 3) resource sets, at least one may be a P SRS resource set, at least one may be an SP SRS resource set, and at least one may be an AP SRS resource set.

In other words, all of the X SRS resource sets may be one (same) type of SRS resource sets (for example, cases 1 to 3), and the X SRS resource sets may include a plurality of types of resource sets (for example, cases 4 to 7). When case 3 is applied, for example, a restriction of Rel. 16/17 "values of entries of aperiodicSRS-ResourceTrigger or AperiodicSRS-ResourceTriggerList of each SRS resource set are the same" may be removed.

In a first embodiment, regarding the SP/AP SRS resource set/resources, start/trigger of the SRS resources is the same as in Rel. 16, that is, start/trigger may be performed for each SRS resource set.

Regarding association between the SRS resources and the UE antenna ports, it is considered that the following options are applied.

### [Option 1-1]

When all of the X resource sets are of the same resource type (case 1/2/3), in a default configuration, the SRS ports/pairs (groups) of SRS ports of different SRS resources in the X resource sets may be associated with different UE antenna ports/pairs (groups) of UE antenna ports. The expression "in a default configuration" used herein may mean a case in which the association between the SRS ports/pairs (groups) of SRS ports of SRS resources and the UE antenna ports/pairs (groups) of UE antenna ports is not particularly configured.

### [Option 1-2]

The UE may be configured with a resource set group including a plurality of (X) SRS resource sets. The UE may receive the configuration, using higher layer signaling/physical layer signaling.

The plurality of SRS resource sets in the resource set group may include a total of two SRS resources in 1T2R/2T4R/4T8R, a total of four SRS resources in 1T4R/2T8R, a total of six SRS resources in 1T6R, a total of eight SRS resources in 1T8R, and a total of three SRS resources in 2T6R.

One or a plurality of resource set groups may be configured for the UE. In each case (case 1/2/3/4/5/6 described above), a different resource set group may be configured. There may be only one resource set group that can be configured in each case.

### [[Variation 1]]

The UE may assume/determine that X resource sets of the same resource type (P/SP/AP) are included in one resource set group. The X SRS resource sets may be all of the resource sets configured for the UE.

### [[Variation 2]]

The UE may assume/determine that X SRS resource sets having the same usage (for example, antenna switching) are included in one resource set group. The X SRS resource sets may be all of the resource sets configured for the UE.

### [[Variation 3]]

The UE may assume/determine that X SRS resource sets of the same resource type (P/SP/AP) that are configured with the same usage (for example, antenna switching) are included in one SRS resource set group. The X SRS resource sets may be all of the resource sets configured for the UE.

In other words, the UE may receive information indicating at least one of the resource type and the usage of a plurality of SRS resource sets, and determine the resource set group including the plurality of SRS resource sets, based on the information. Accordingly, without receiving information explicitly indicating a resource set group corresponding to a certain resource set, the UE can determine the resource set group to which the resource set belongs.

By applying the resource set group, even when the number of SRS resources included in the SRS resource set is small (for example, one), a comprehensive configuration for each resource set group can be performed. Channel measurement and the like for each SRS resource (for each corresponding antenna port) can be flexibly performed.

### [Option 1-3]

The UE antenna ports/UE antenna port pairs (groups) related to the SRS ports/SRS port pairs (groups) of each SRS resource/resource set may be explicitly configured for each SRS resource/SRS resource set. The configuration may be performed using higher layer signaling/physical layer signaling.

The UE may maintain the same association between the UE antenna ports and the SRS resources. The UE may maintain the same association within a specific time period. The time period may be a predefined/preconfigured time period recognized by both of the base station (for example, a gNB) and the UE. The association may be updated by an indication/report from the UE to the base station. The association may be updated by an indication/configuration from the base station to the UE.

### [Specific Examples]

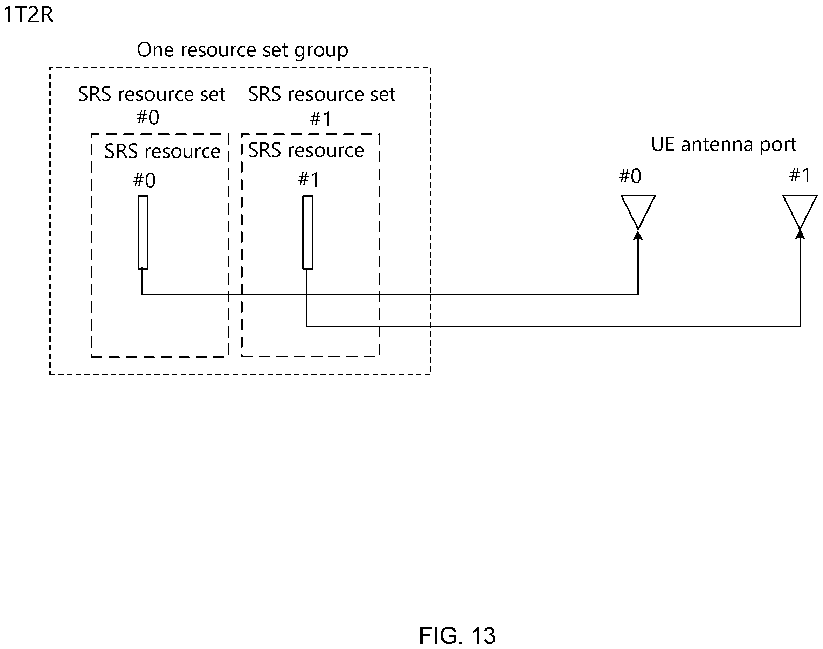

In a case of 1T2R, one resource set group may include two P/SP/AP SRS resource sets, and each SRS resource set may include one SRS resource (FIG. 13). Each SRS resource may include one SRS port. For example, when the network (base station) needs to acquire the CSI of a specific UE antenna port (for example, antenna port #0), the network may start/trigger only the SRS resource set (SRS resource set #0) including the SRS resource (SRS port) corresponding to the UE antenna port. The same applies to other examples.

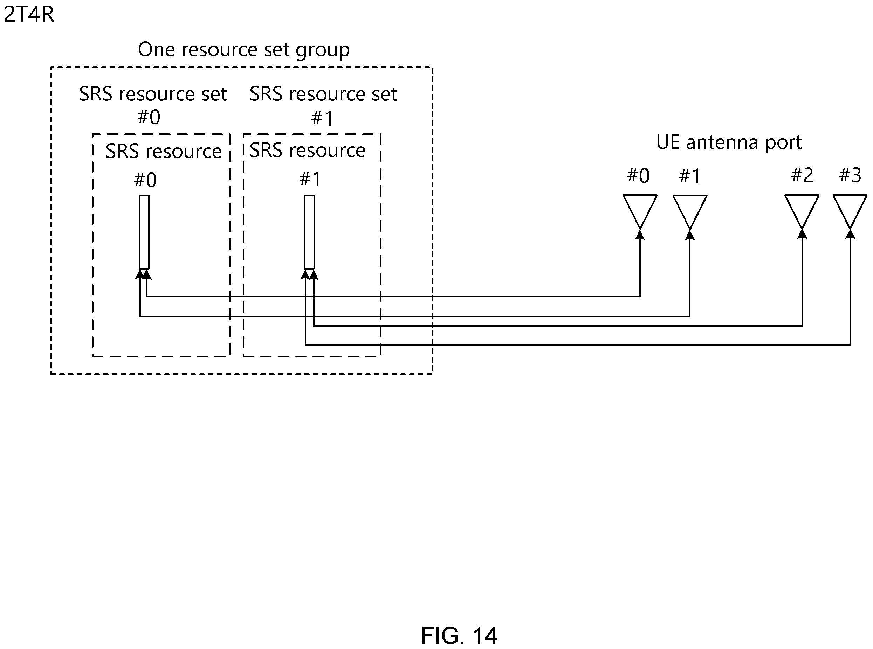

In a case of 2T4R, one resource set group may include two P/SP/AP SRS resource sets, and each SRS resource set may include one SRS resource (FIG. 14). Each SRS resource may include two SRS ports.

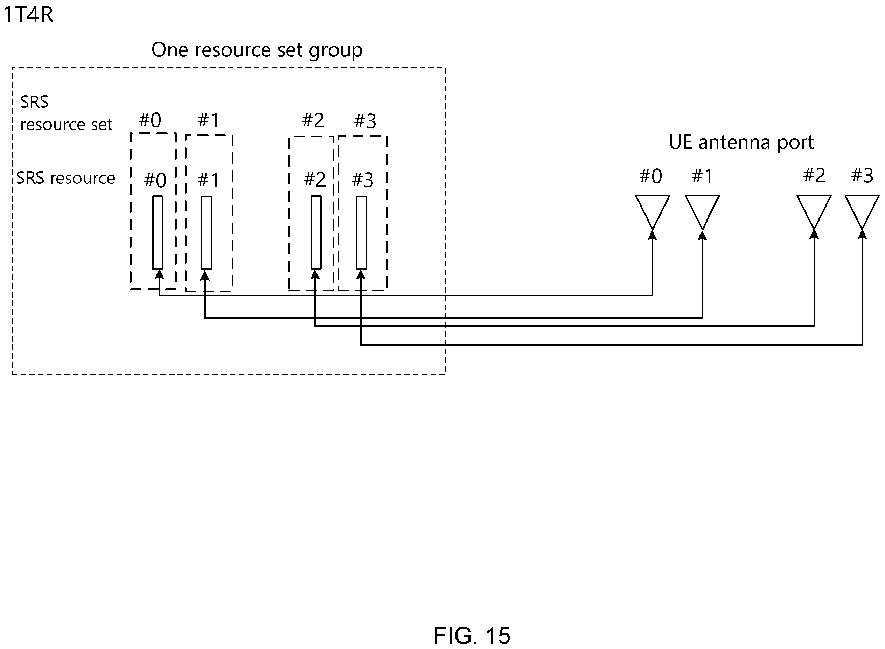

In a case of 1T4R, one resource set group may include two/three/four P/SP/AP SRS resource sets, and the two/three/four resource sets in the SRS resource set group may include a total of four SRS resources (FIG. 15, FIG. 16, and FIG. 17). Each SRS resource may include one SRS port.

For example, in a case of 1T4R, one resource set group may include four P/SP/AP SRS resource sets, and each SRS resource set may include one SRS resource (FIG. 15). Each SRS resource may include one SRS port.

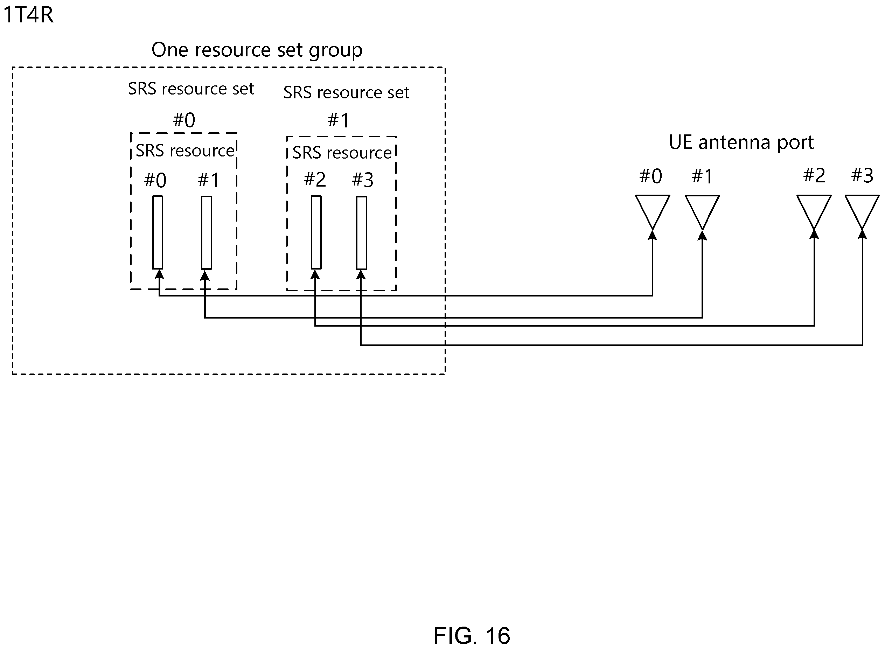

For example, in a case of 1T4R, one resource set group may include two P/SP/AP SRS resource sets, and each SRS resource set may include two SRS resources (FIG. 16). Each SRS resource may include one SRS port.

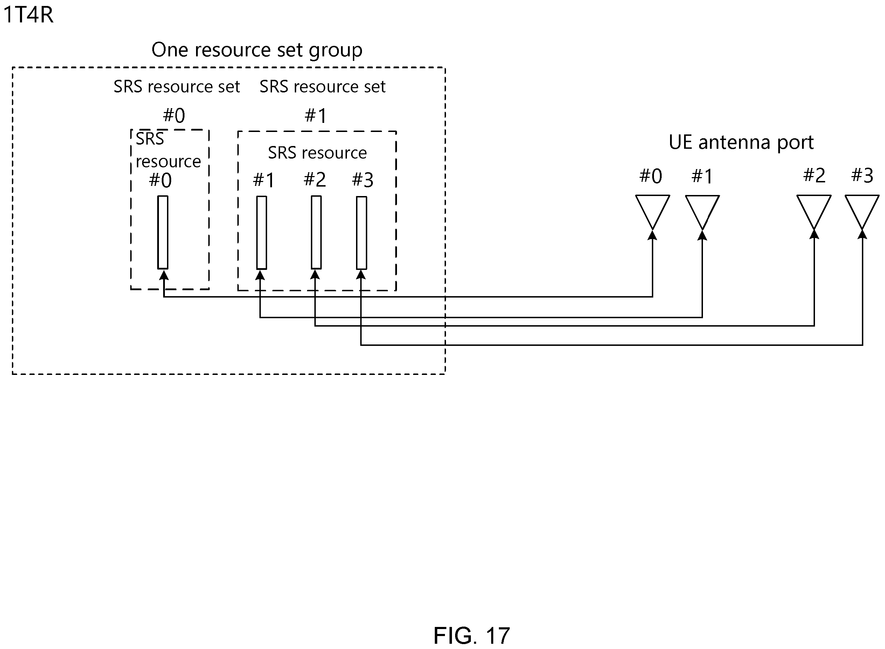

For example, in a case of 1T4R, one resource set group may include two P/SP/AP SRS resource sets, and one SRS resource set may include one SRS resource and the other SRS resource set may include three SRS resources (FIG. 17). Each SRS resource may include one SRS port.

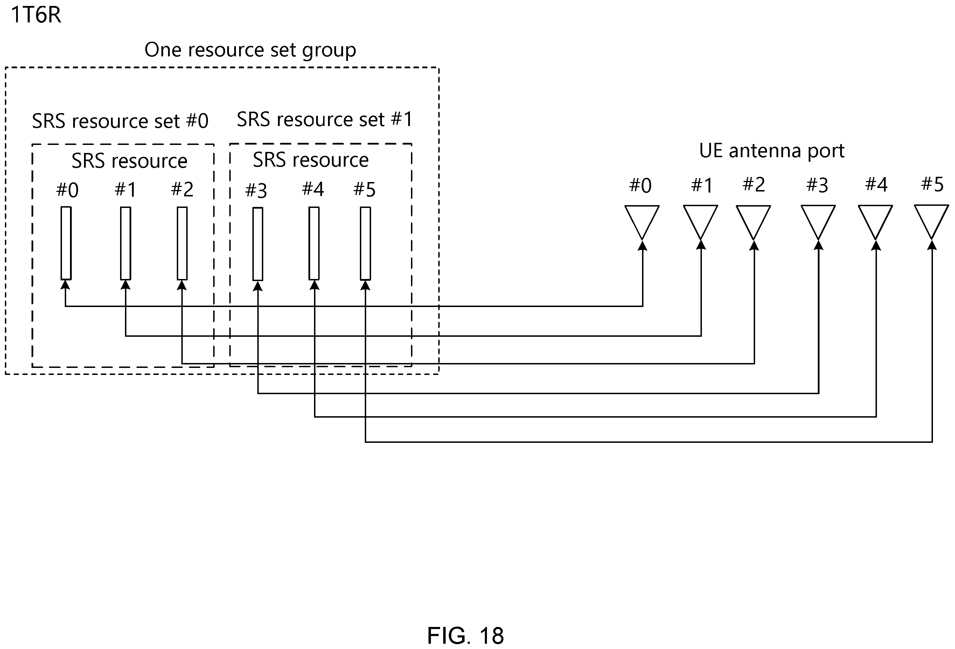

In a case of 1T6R, one resource set group may include two/three/four/five/six P/SP/AP SRS resource sets, and the SRS resource sets in the resource set group may include a total of six SRS resources (FIG. 18). Each SRS resource may include one SRS port. FIG. 18 shows an example in which one resource set group includes two SRS resource sets, and each SRS resource set includes three SRS resources.

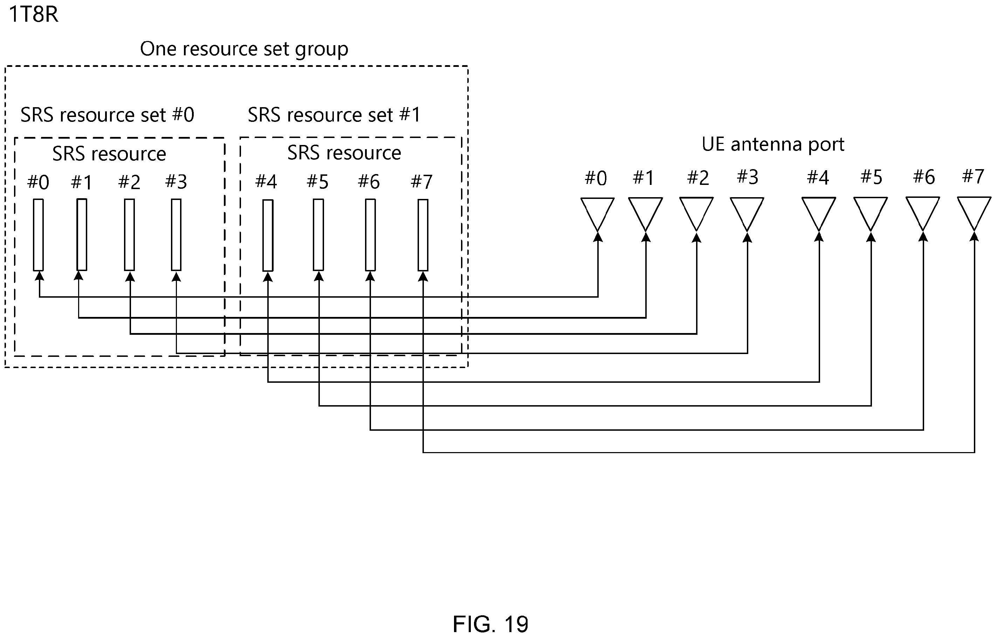

In a case of 1T8R, one resource set group may include two/three/four/five/six/seven/eight P/SP/AP SRS resource sets, and the SRS resource sets in the resource set group may include a total of eight SRS resources (FIG. 19). Each SRS resource may include one SRS port. FIG. 19 shows an example in which one resource set group includes two SRS resource sets, and each SRS resource set includes four SRS resources.

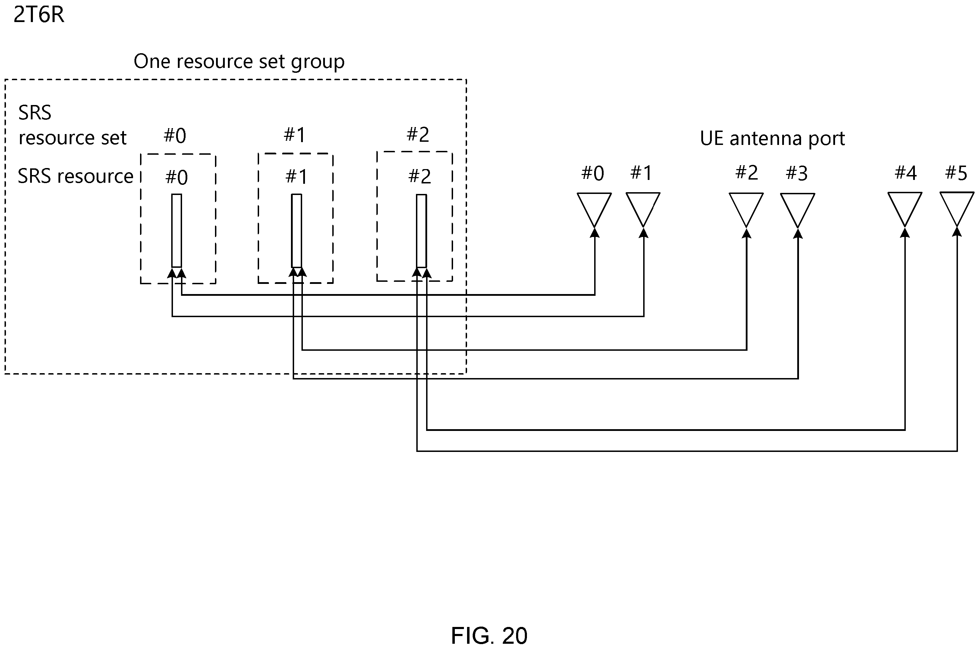

In a case of 2T6R, one resource set group may include two/three P/SP/AP SRS resource sets, and the SRS resource sets in the resource set group may include a total of three SRS resources (FIG. 20). Each SRS resource may include two SRS ports. FIG. 20 shows an example in which one resource set group includes three SRS resource sets, and each SRS resource set includes one SRS resource.

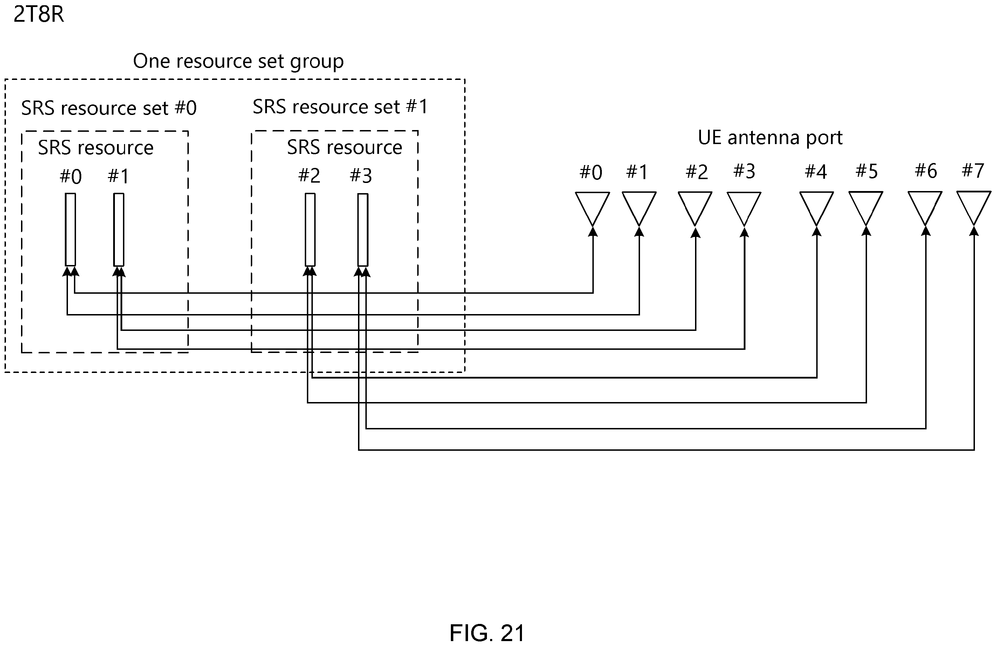

In a case of 2T8R, one resource set group may include two/three/four P/SP/AP SRS resource sets, and the SRS resource sets in the resource set group may include a total of four SRS resources (FIG. 21). Each SRS resource may include two SRS ports. FIG. 21 shows an example in which one resource set group includes two SRS resource sets, and each SRS resource set includes two SRS resources.

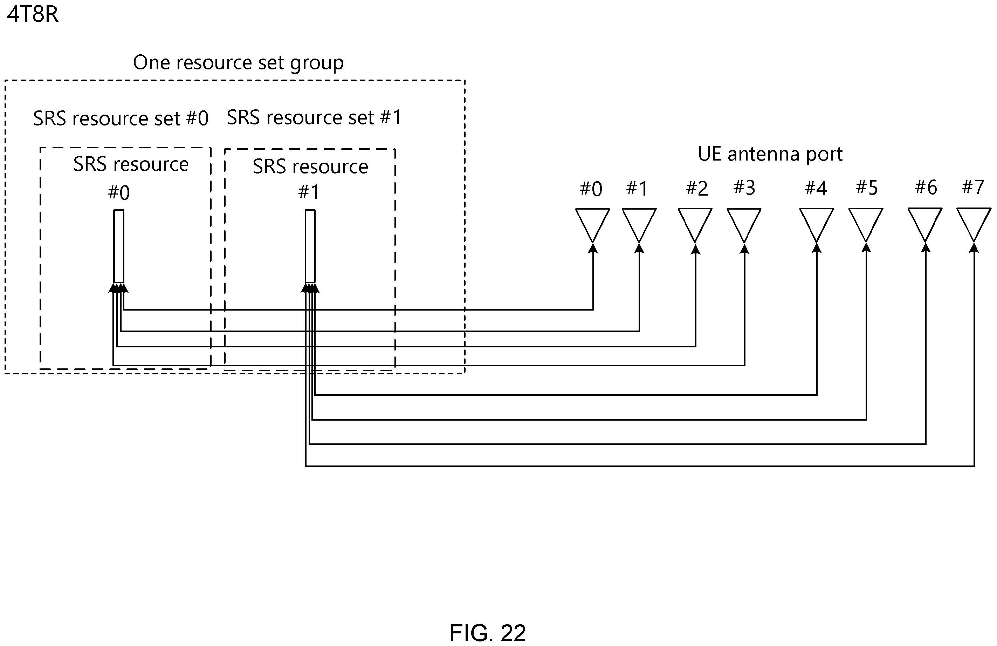

In a case of 4T8R, one resource set group may include two P/SP/AP SRS resource sets, and each SRS resource set may include one SRS resource (FIG. 22). Each SRS resource may include four SRS ports.

### [Modifications]

In Rel. 16, when the UE supports 1T2R, the SRS resource set for 1T1R and the SRS resource set for 1T2R cannot be simultaneously configured for the UE. To enable the configuration, specifications need to be changed. When the UE supports 1T2R, the antenna port of each SRS resource may be unique in the SRS resource set. In a case of the AP SRS resource set configured in the same entry (for example, the entry of AperiodicSRS-ResourceTriggerList, entry of the triggering state), the antenna port of each SRS resource may be unique in the SRS resource set configured in the same entry.

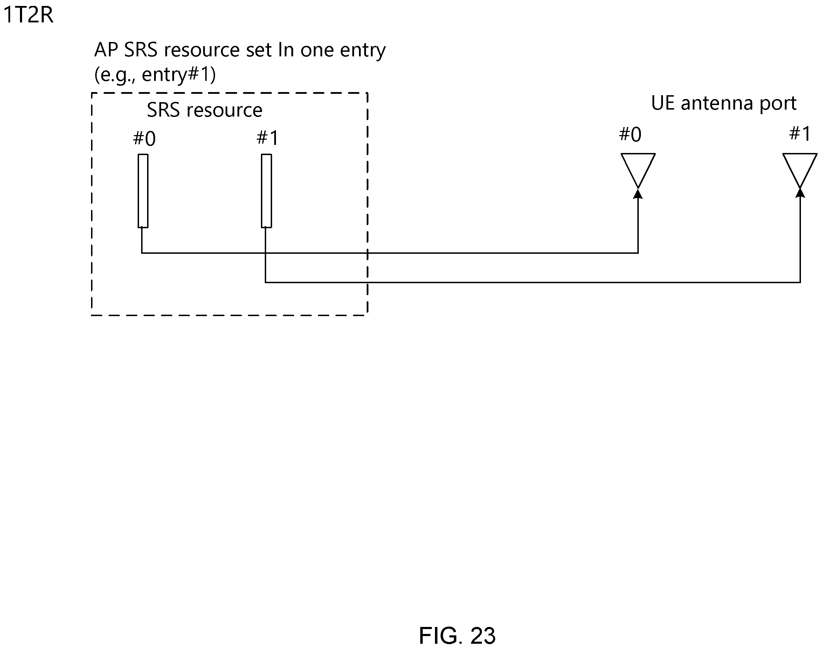

FIG. 23 is a diagram to show an example in which 1T2R is applied and two SRS resources are present in one entry in Rel. 16. The antenna ports of the two SRS resources may be unique in the SRS resource set/entry.

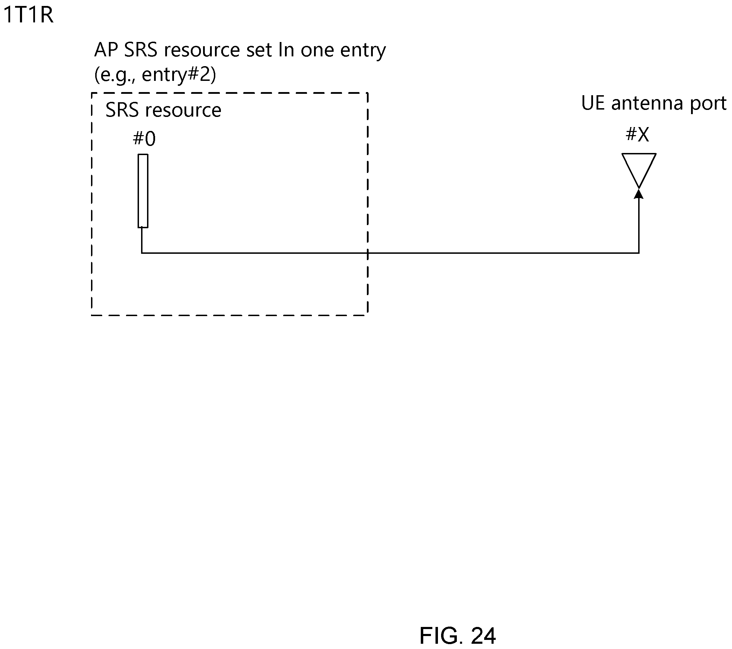

FIG. 24 is a diagram to show an example in which 1T1R is applied and one SRS resource is present in one entry in Rel. 16. The antenna port of the one SRS resource may be unique in the SRS resource set/entry.

In Rel. 16, only one configuration (xTyR) of the antenna ports can be performed, and thus both of the configurations of FIG. 23 and FIG. 24 cannot be performed. In the light of this, in modifications, the UE may be able to apply a plurality of configurations (xTyR) according to the capability (supportedSRS-TxPortSwitch) of the UE, even when the usage of the higher layer parameter of the SRS resource set is configured for antenna switching. In other words, a plurality of configurations in which a different value is used in at least one of "x" and "y" may be applied to the UE.

However, it is preferable that the base station (gNB) and the UE be able to recognize an antenna port relationship between the SRS resources/resource sets. Thus, the following first modification/second modification may be applied.

### [[First Modification]]

The UE may receive information for indicating/configuring the antenna port for each SRS resource, using higher layer signaling/physical layer signaling. For example, the UE may receive an index indicating the antenna port for each SRS resource. In the current specifications (Rel. 15/16), the number of antenna ports can be configured for each SRS resource, but the antenna ports cannot be indicated. When the antenna ports are indicated/configured as in the first modification, the UE can easily identify the antenna ports to be used in each SRS resource transmission.

### [[Second Modification]]

When the same SRS resource set having the usage of antenna switching is configured/activated/triggered, the UE may transmit (may assume to transmit) the SRS in the same antenna port.

The base station and the UE can recognize which antenna ports are the same through different SRS transmissions. The configuration/activation/triggering may be performed based on higher layer signaling/physical layer signaling, or a specification. For example, when a plurality of SRS resource sets using antenna switching in different antenna configurations are configured, the UE may apply the second modification.

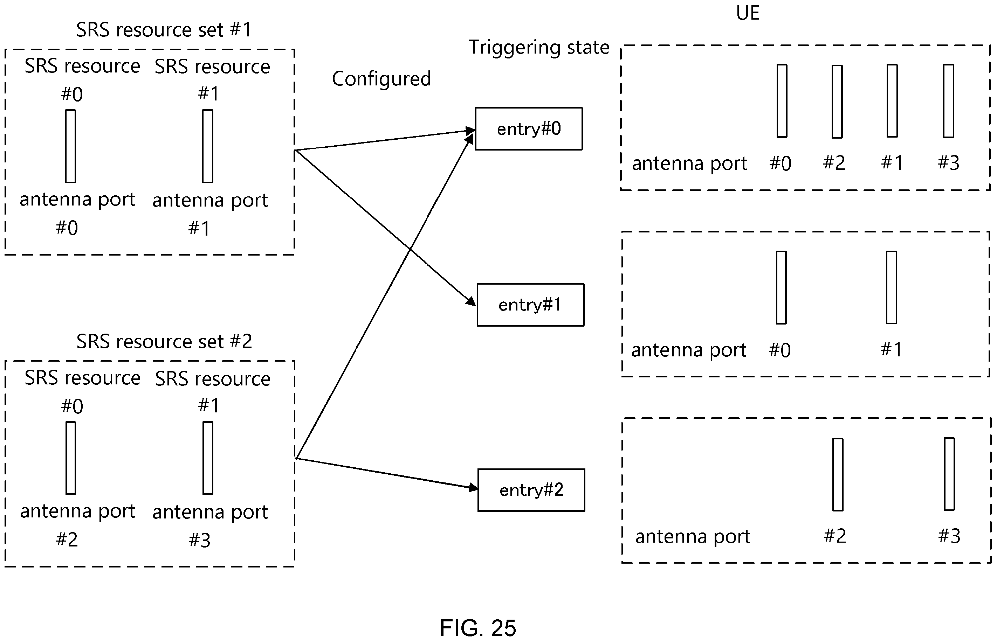

FIG. 25 is a diagram to show a correspondence example between the SRS resource sets and the entries in the second modification. In FIG. 25, SRS resource set #1 is configured for the triggering state of entries #0 and #1, and SRS resource set #2 is configured for the triggering state of entries #0 and #2. The UE may use the UE antenna ports corresponding to the antenna ports of the SRS resources in the SRS resource set corresponding to the configured triggering state. Accordingly, the UE can identify the antenna ports, based on the SRS resource set/triggering state.

Note that, when a plurality of SRS resource sets are configured for the triggering state of one entry, the UE may transmit (may assume to transmit) the SRS using the antenna ports different between the plurality of SRS resource sets.

### <Second Embodiment>

The UE may receive information indicating activation/deactivation for each SRS resource using a MAC CE, and control transmission of the SRS, based on the information. For example, regarding the SP SRS resources/resource set, the SRS resources may be activated individually (for each SRS resource) via the MAC CE. Regarding the AP SRS resources/resource set, the SRS resources may be triggered using triggering DCI individually (for each SRS resource). The second embodiment is applied to a configuration of the SRS resources having the usage of antenna switching for 1T2R, 1T4R, 2T4R, 1T6R, 1T8R, 2T6R, 2T8R, and 4T8R, for example. Note that the second embodiment may be applicable to not only the SRS resource set having the usage of antenna switching, but also to the SRS resource set for other usages (a codebook, a non-codebook, beam management, positioning, and the like).

In the second embodiment, 1T2R, 2T4R, and 1T4R have the same configurations (FIG. 1 to FIG. 5) as those of Rel. 16 described above. Other configurations (xTyR) may also be the same as the configurations of Rel. 16.

The UE may maintain the same association between the UE antenna ports and the SRS resources. The UE may maintain the same association within a specific time period. The time period may be a predefined/preconfigured time period recognized by both of the base station (for example, a gNB) and the UE. The association may be updated by an indication/report from the UE to the base station. The association may be updated by an indication/configuration from the base station to the UE.

### [Aspect 2-1]

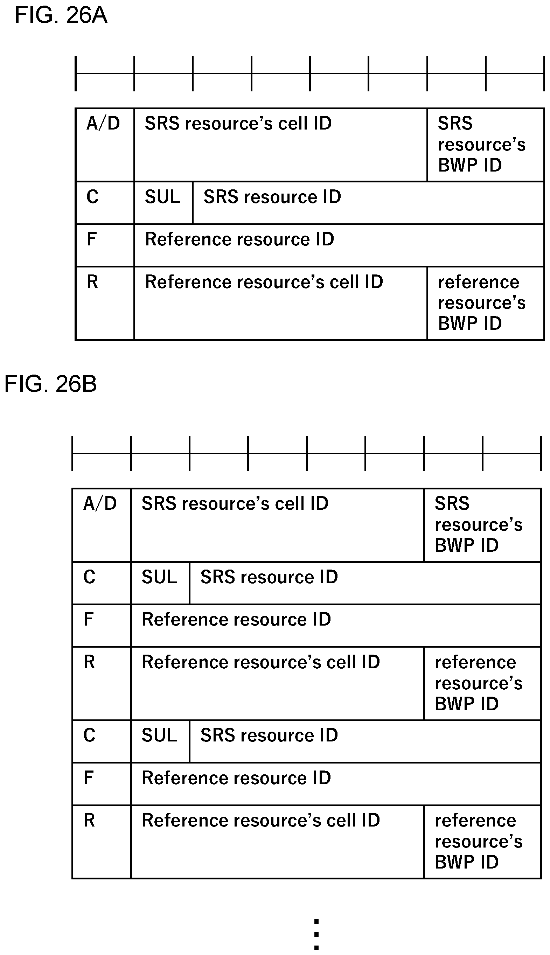

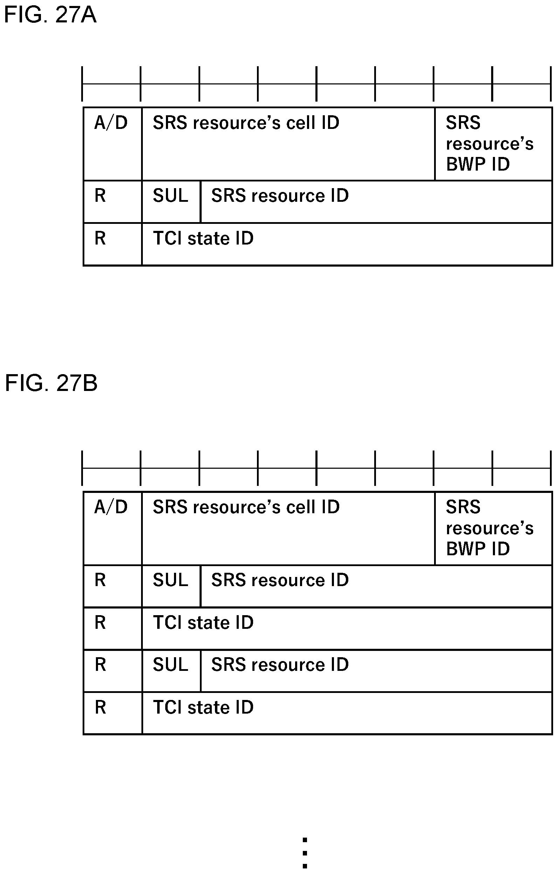

FIG. 26A, FIG. 26B, FIG. 27A, and FIG. 27B are diagrams to show examples of a MAC CE of aspect 2-1. The MAC CE may include a field indicating an ID of the SRS resource to be activated or deactivated. In the following, the "field" may be omitted in description. Note that one row of the MAC CE shown in the present disclosure is one octet (8 bits).

The MAC CE may further include at least one of fields of an identifier (A/D) indicating activation/deactivation of the SRS resource, a serving cell ID of the SRS resource (SRS resource's cell ID), a BWP ID (SRS resource's BWP ID), and an SUL indication (indicating whether the MAC CE is applied to an NUL or applied to an SUL).

The MAC CE may include spatial relation information of the SRS resource to be activated. The MAC CE may include fields of an ID of a reference resource used in deriving the spatial relation of the SRS resource (Reference resource ID), a serving cell ID of the reference resource, a BWP ID of the reference resource, and the like.

The MAC CE may include a serving cell ID field for the reference resource and an indicator (C field) as to whether the BWP ID field is present. When it is not present, the same serving cell/BWP as the serving cell/BWP of the SRS resource may be applied to the reference resource (FIG. 26A and FIG. 26B). When the reference resource is a CSI-RS or an SSB, the MAC CE may include an indicator (F field) indicating whether the reference resource is a CSI-RS or an SSB.

Alternatively, instead of the spatial relation information of the SRS resource, the MAC CE may indicate information indicating the TCI state corresponding to the SRS resource to be activated (for example, a Rel-17 TCI state ID used for deriving the spatial relation of the SRS resource) (FIG. 27A and FIG. 27B).

The MAC CE may include information related to activation/deactivation of a plurality of SRS resources (FIG. 26B and FIG. 27B). In this case, one MAC CE may include one A/D field corresponding to a plurality of SRS resources, a serving cell ID field for the SRS resources, and a BWP ID field, and other information (fields) may be configured for each SRS resource. In this case, whether the A/D field for a plurality of SRS resources is present may be indicated using reserved bits (R).

### [Aspect 2-2]

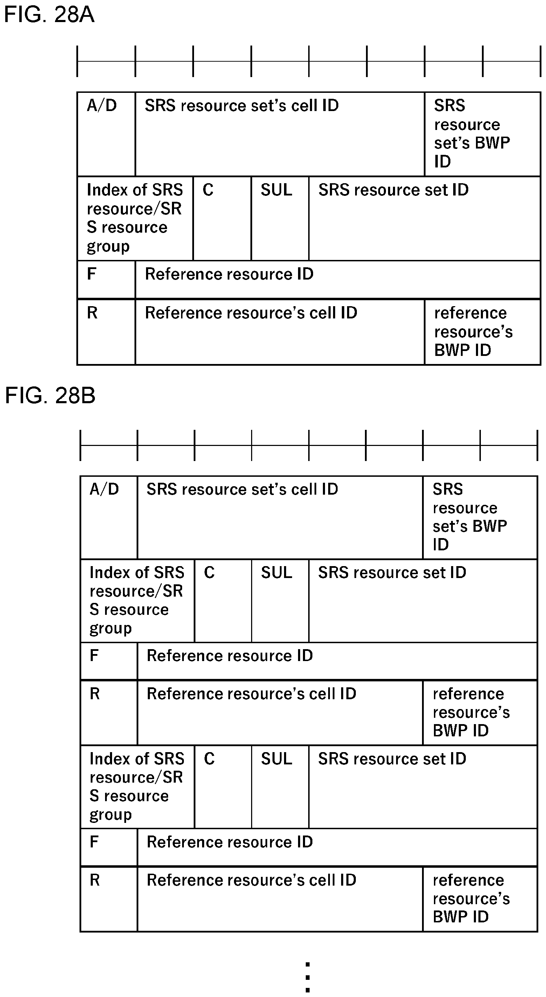

FIG. 28A, FIG. 28B, FIG. 29A, FIG. 29B, FIG. 30A, FIG. 30B, FIG. 31A, and FIG. 31B are diagrams to show examples of a MAC CE of aspect 2-2. In aspect 2-2, description of similarities to aspect 2-1 may be omitted. The MAC CE includes information indicating activation/deactivation for each SRS resource set. For example, the MAC CE includes a field indicating an ID of the SRS resource set to be activated/deactivated and a field indicating specific information (indicator) indicating which SRS resource in the SRS resource set is to be activated or deactivated.

The MAC CE may further include at least one of an identifier (A/D) indicating activation/deactivation of the SRS resource set, a field for a serving cell ID of the SRS resource set (SRS resource set's cell ID), and a BWP ID (SRS resource set's BWP ID) field.

### [[Option 2-2-1]]

The specific information may be indices of SRS resources in the SRS resource set. The indices are mapped to the SRS resources in predefined order. For example, indices 0/1/2/3/.../N - 1 may be mapped to first/second/third/fourth/.../Nth SRS resources in the resource set. For example, a plurality of indices may correspond to one SRS resource.

### [[Option 2-2-2]]

The specific information may be indices of SRS resource groups in the SRS resource set. The SRS resource group includes one or a plurality of SRS resources. For example, indices 0/1/.../N - 1 may be mapped to first/second/.../Nth groups. For example, the first group may include the first and second SRS resources, and the second group may include the third and fourth SRS resources. For example, a plurality of indices may correspond to one SRS resource group.

FIG. 28A and FIG. 28B are diagrams to show first examples of the MAC CE of option 2-2-1 and option 2-2-2. Regarding "Index of SRS resource/SRS resource group", when option 2-2-1 is applied, the indices of the SRS resources are applied, and when option 2-2-2 is applied, the indices of the SRS resource groups are included. In FIG. 28A and FIG. 28B, "Index of SRS resource/SRS resource group" has 2 bits, but may have 1 bit or 3 or more bits. FIG. 28A shows an example of the MAC CE corresponding to one SRS resource set. FIG. 28B shows an example of the MAC CE corresponding to a plurality of SRS resource sets. Description of similarities to FIG. 26A and FIG. 26B will be omitted. In this case, whether the A/D field for a plurality of SRS resource sets is present may be indicated using reserved bits (R).

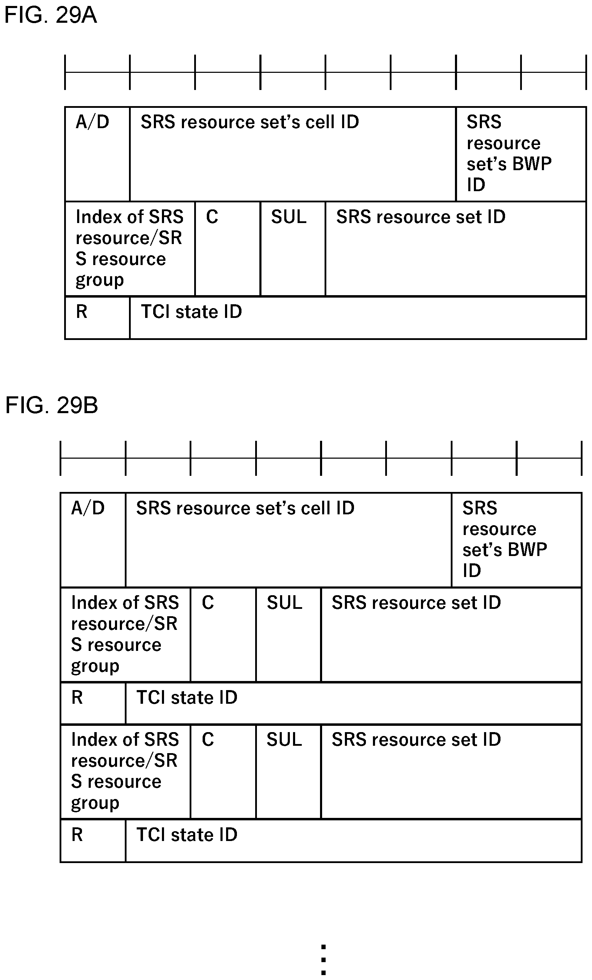

FIG. 29A and FIG. 29B are diagrams to show second examples of the MAC CE of option 2-2-1 and option 2-2-2. FIG. 29A and FIG. 29B are different from FIG. 28A and FIG. 28B in that the information indicating the TCI state corresponding to the SRS resource to be activated (the Rel-17 TCI state ID used for deriving the spatial relation of the SRS resource) is applied instead of the spatial relation information of the SRS resource. Description of similarities to FIG. 28A and FIG. 28B will be omitted.

### [[Option 2-2-3]]

The specific information may be a bitmap in which each bit corresponds to an SRS resource, and first/second/third/fourth/.../Nth bits may be mapped to first/second/third/fourth/.../Nth SRS resources in the SRS resource set. N is a most significant bit (MSB) or a least significant bit (LSB). When a bit is set to "1" (or "0"), it may mean that the SRS resource is activated, and when it is set to "0" (or "1"), it may mean that the SRS resource is deactivated.

### [[Option 2-2-4]]

The specific information may be a bitmap in which each bit corresponds to an SRS resource group, and first/second/third/fourth/.../Nth bits may be mapped to first/second/third/fourth/.../Nth SRS resource groups corresponding to the SRS resource set. N is a most significant bit (MSB) or a least significant bit (LSB). When a bit is set to "1" (or "0"), it may mean that the SRS resource group is activated, and when it is set to "0" (or "1"), it may mean that the SRS resource group is deactivated.

The SRS resource group may include one or a plurality of SRS resources. Grouping of the SRS resources may conform to a predefined rule (specification), or a configuration/indication of the base station (gNB). The SRS resource group may be indicated for the UE, using higher layer signaling/lower layer signaling.

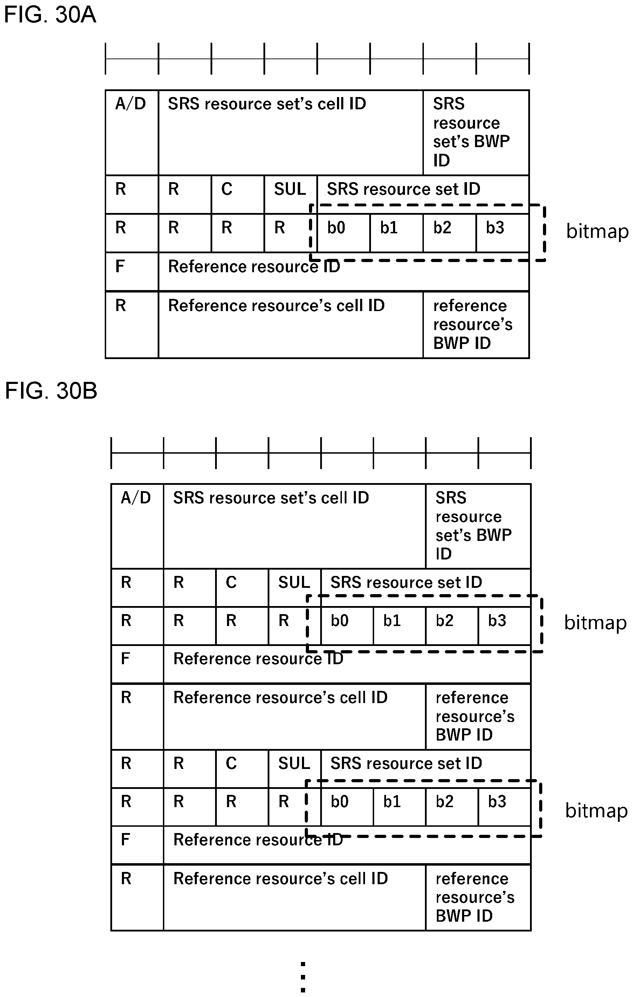

FIG. 30A and FIG. 30B are diagrams to show first examples of the MAC CE of options 2-2-3 and 2-2-4. b0, b1, b2, and b3 correspond to the SRS resource (option 3)/SRS resource group (option 4). In FIG. 30A and FIG. 30B, the bitmap has 4 bits, but the number of bits may be a different number. FIG. 30A shows an example of the MAC CE corresponding to one SRS resource set. FIG. 30B shows an example of the MAC CE corresponding to a plurality of SRS resource sets. Description of similarities to FIG. 28A and FIG. 28B will be omitted. In this case, whether the A/D field for a plurality of SRS resource sets is present may be indicated using reserved bits (R).

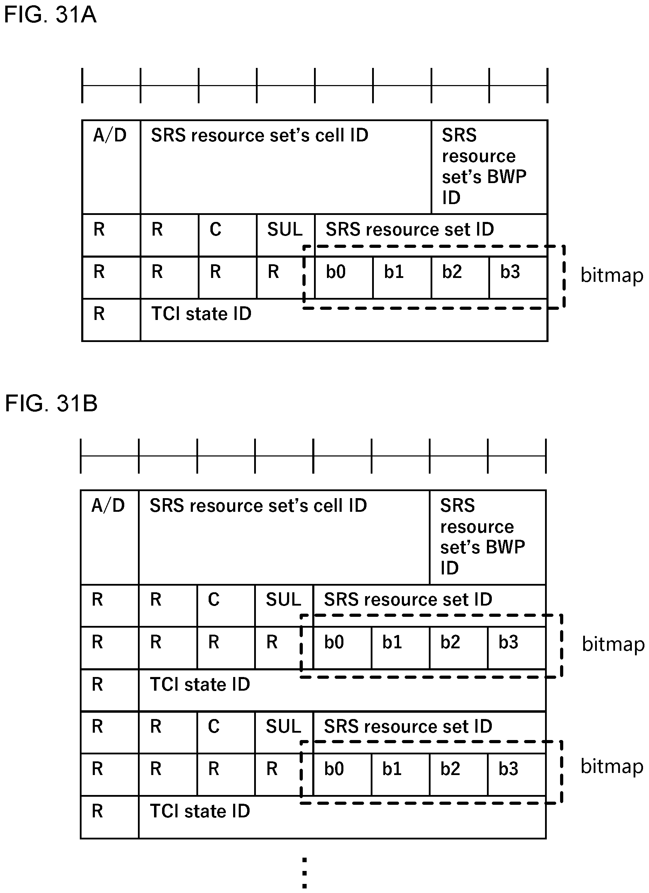

FIG. 31A and FIG. 31B are diagrams to show second examples of the MAC CE of options 2-2-3 and 2-2-4. FIG. 31A and FIG. 31B are different from FIG. 30A and FIG. 30B in that the information indicating the TCI state corresponding to the SRS resource to be activated (the Rel-17 TCI state ID used for deriving the spatial relation of the SRS resource) is applied instead of the spatial relation information of the SRS resource. Description of similarities to FIG. 30A and FIG. 30B will be omitted. FIG. 31A shows an example of the MAC CE corresponding to one SRS resource set. FIG. 31B shows an example of the MAC CE corresponding to a plurality of SRS resource sets.

In options 2-2-1 to 2-2-4, first/second/third/fourth/.../Nth SRS resources in the SRS resource set may correspond to first/second/third/fourth/.../Nth entries of SRS-ResourceIdList (RRC parameter) in the configuration of the SRS resource set. Alternatively, the first/second/third/fourth/.../Nth SRS resources in the SRS resource set may be SRS resources having first/second/third/fourth/.../Nth SRS resource IDs.

### [Design of Triggering of AP SRS Resources]

The UE may receive information (for example, the higher layer parameter aperiodicSRS-ResourceTrigger or aperiodicSRS-ResourceTriggerList) indicating an SRS triggering state for each SRS resource. Similarly to Rel. 16, the SRS triggering state may be indicated in an SRS request field in DCI, based on the higher layer parameter.

Alternatively, the UE may receive information (for example, the higher layer parameter aperiodicSRS-ResourceTrigger or aperiodicSRS-ResourceTriggerList) indicating an SRS triggering state for each SRS resource set. Similarly to Rel. 16, which SRS resource in the SRS resource set is triggered may be indicated by DCI for triggering the SRS. The indication may be applied as well as aspect 2-2.

According to the second embodiment, by receiving various configurations for each SRS resource, the UE can appropriately control SRS transmission.

### <UE Capability>

The UE may transmit (report) UE capability information indicating whether to support at least one of the examples in the present disclosure to a network (base station). The UE may receive an indication/configuration related to at least one of the examples in the present disclosure (for example, an indication/configuration indicating enabling/disabling of the examples), using higher layer signaling/physical layer signaling. The indication/configuration may correspond to the UE capability information that has been transmitted by the UE. At least one of the examples in the present disclosure may be applied only to at least one of the UE that has received the indication/configuration, the UE that has transmitted corresponding UE capability information, and the UE that supports a corresponding UE capability. The UE capability information may be at least one of the following (1) to (3), for example.

(1) Whether the UE supports AI assistance in a UE sounding procedure for DL CSI acquisition.
(2) Whether the UE supports a new configuration mode for the SRS resource set described in the first embodiment.
(3) Whether the UE supports activation/deactivation/triggering of the SRS resources described in the second embodiment.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

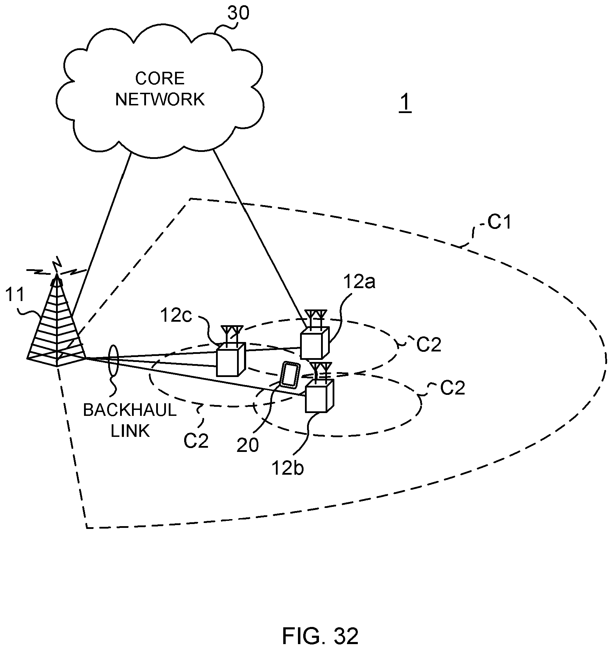

FIG. 32 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may also be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

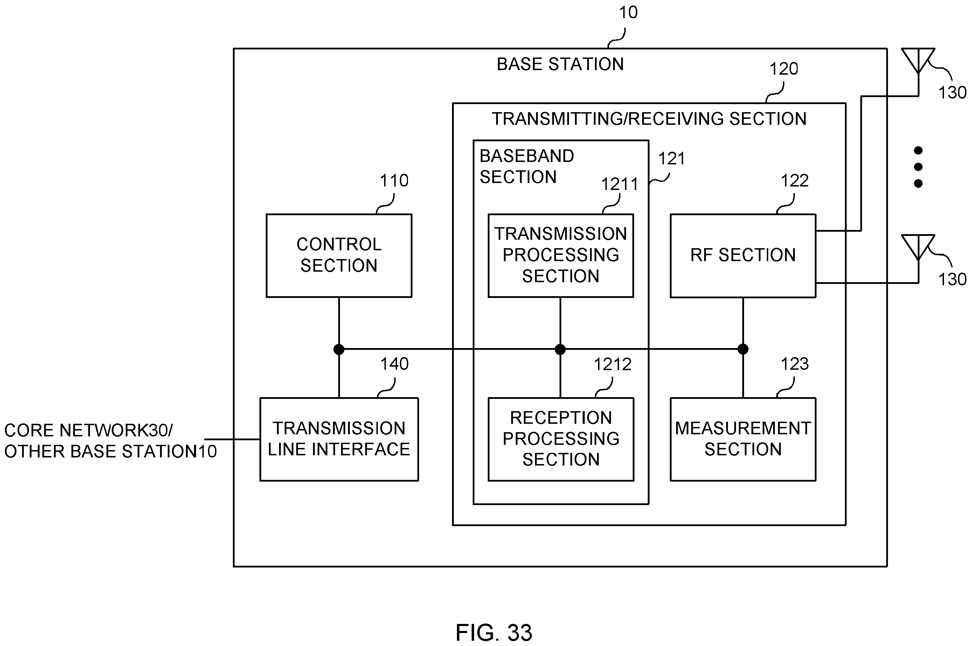

FIG. 33 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a plurality of sounding reference signal (SRS) resource sets including one or more types of SRS resource sets. The control section 110 may control reception of an SRS transmitted using an antenna port corresponding to an SRS resource in the plurality of SRS resource sets based on the configuration corresponding to a resource set group including the plurality of SRS resource sets.

The transmitting/receiving section 120 may transmit a Medium Access Control Control Element (MAC CE) including information indicating activation or deactivation for each Sounding Reference Signal (SRS) resource. The control section 110 may control reception of the SRS transmitted based on the information.

### (User Terminal)

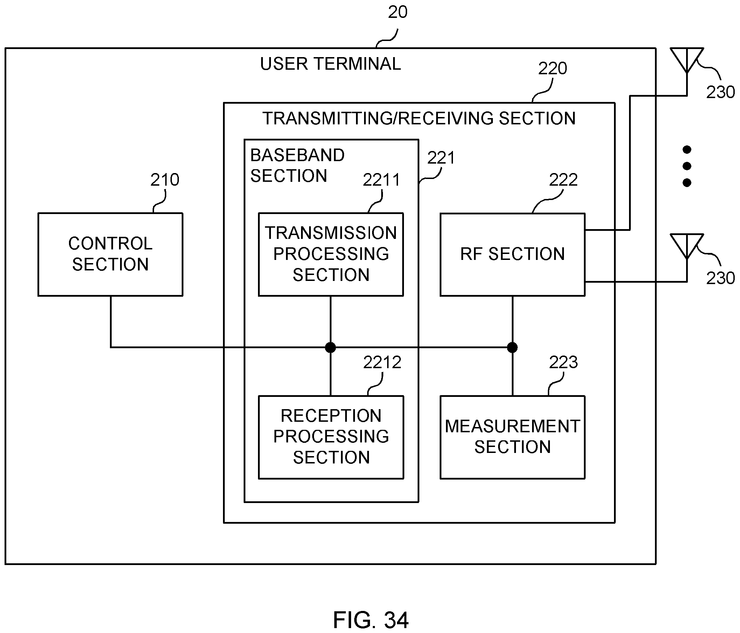

FIG. 34 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration of a plurality of sounding reference signal (SRS) resource sets including one or more types of SRS resource sets. The control section 210 may control transmission of an SRS using an antenna port corresponding to an SRS resource in the plurality of SRS resource sets, based on the configuration corresponding to a resource set group including the plurality of SRS resource sets. The plurality of SRS resource sets may include a plurality of types of the SRS resource sets.

The transmitting/receiving section 220 may receive information indicating at least one of a resource type and a usage of the plurality of SRS resource sets. The control section 210 may determine the resource set group including the plurality of SRS resource sets, based on the information.

The transmitting/receiving section 220 may receive information for indicating the antenna port for each SRS resource. The control section 210 may determine the antenna port to be used for transmission of the SRS, based on the information for indicating the antenna port.

The transmitting/receiving section 220 may receive a Medium Access Control Control Element (MAC CE) including information indicating activation or deactivation for each Sounding Reference Signal (SRS) resource. The control section 210 may control transmission of the SRS, based on the information.

The MAC CE may further include spatial relation information of the SRS resource to be activated. The MAC CE may further include information indicating a Transmission Configuration Indication state (TCI) state corresponding to the SRS resource to be activated. The MAC CE may further include information indicating activation or deactivation for each SRS resource set including the SRS resource.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

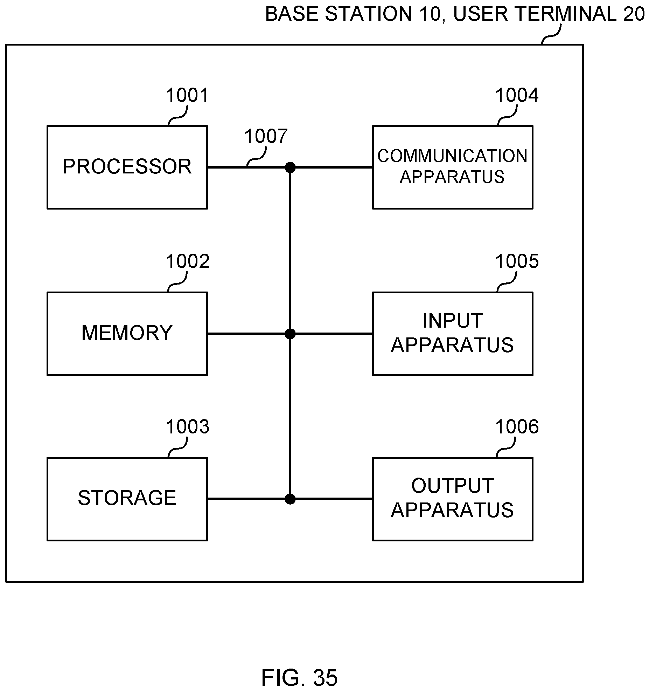

For example, a base station, a user terminal, and so on according to one embodiment of the present disclosure may function as a computer that executes the processes of the radio communication method of the present disclosure. FIG. 35 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

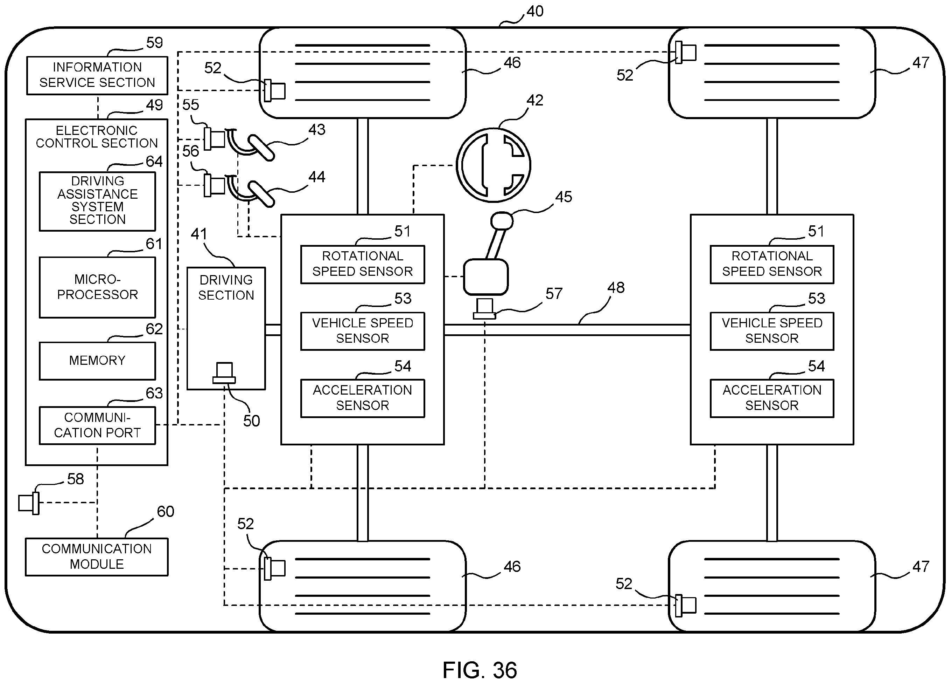

FIG. 36 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a configuration of a plurality of sounding reference signal (SRS) resource sets including one or more types of SRS resource sets; and
a control section that controls transmission of an SRS using an antenna port corresponding to an SRS resource in the plurality of SRS resource sets, based on the configuration corresponding to a resource set group including the plurality of SRS resource sets.

2. The terminal according to claim 1, wherein
the plurality of SRS resource sets include a plurality of types of the SRS resource sets.

3. The terminal according to claim 1 or 2, wherein
the receiving section receives information indicating at least one of a resource type and a usage of the plurality of SRS resource sets, and
the control section determines the resource set group including the plurality of SRS resource sets, based on the information.

4. The terminal according to any one of claims 1 to 3, wherein
the receiving section receives information for indicating the antenna port for each SRS resource, and
the control section determines the antenna port to be used for transmission of the SRS, based on the information for indicating the antenna port.

5. A radio communication method for a terminal, the radio communication method comprising:
receiving a configuration of a plurality of sounding reference signal (SRS) resource sets including one or more types of SRS resource sets; and
controlling transmission of an SRS using an antenna port corresponding to an SRS resource in the plurality of SRS resource sets, based on the configuration corresponding to a resource set group including the plurality of SRS resource sets.

6. A base station comprising:
a transmitting section that transmits a configuration of a plurality of sounding reference signal (SRS) resource sets including one or more types of SRS resource sets; and
a control section that controls reception of an SRS transmitted using an antenna port corresponding to an SRS resource in the plurality of SRS resource sets, based on the configuration corresponding to a resource set group including the plurality of SRS resource sets.
